# EUROPEAN PATENT APPLICATION

(11) **EP 2 498 528 A1**
(43) Date of publication of application: **12.09.2012**
(21) Application number: 09851097.7
(22) Date of filing: 06.11.2009
(51) Int. Cl.: H04W 12/06, H04W 4/02, H04W 84/10

(54) **RADIO BASE STATION, COMMUNICATION SYSTEM AND COMMUNICATION CONTROL METHOD**

(71) Applicant: Fujitsu Limited, Kawasaki-shi, Kanagawa 211-8588 (JP)
(72) Inventor: SHINADA, Yuki, Kawasaki-shi Kanagawa 211-8588 (JP); KOBAYASHI, Kazunari, Kawasaki-shi Kanagawa 211-8588 (JP); KAWAI, Hiromitsu, Kawasaki-shi Kanagawa 211-8588 (JP); NITTA, Daisuke, Kawasaki-shi Kanagawa 211-8588 (JP)
(74) Representative: Fenlon, Christine Lesley
(86) International application number: PCT/JP2009/068969
(87) International publication number: WO 2011/055445

(57) **Abstract**

A wireless base station (1) capable of communicating with a wireless terminal (2) includes an analyzer (10) that analyzes a pattern of a status of the wireless terminal (2) ; and a controller (7, 12) that provides the wireless terminal (2) with information or a function based on the pattern.

## Description

The present invention relates to a wireless base station, and a method of controlling communication. The present invention may be used in a communication system including smaller wireless base stations, also known as femto base stations, for example.

### BACKGROUND ART

Recently, femto base stations (also referred to as ultra-small base stations) have been used as one type of wireless base stations for mobile phones. Femto base stations have smaller cover areas and sizes as compared to existing wireless base stations (also known as macro base stations).
One of the purposes of installing femto base stations, in addition to macro base stations, is elimination of blind zones. For example, by installing femto base stations to locations outside of the reach of radio waves, such as houses and offices, user equipment (UE), e.g., mobile terminals (hereinafter also referred to as mobile stations or wireless terminals) in such an environment can receive mobile communication services.

While macro base stations connect to a carrier network through a dedicated line of a network carrier, femto base stations can also connect the carrier network through public IP networks, e.g., fiber to the home (FTTH) and asymmetric digital subscriber lines (ADSL).
Since femto base stations have features that are distinct from those of macro base stations as ser forth above, a variety of their new applications have been contrived.

For example, since a cover area of a femto base station is smaller than that of a macro base station and since an individual or particular use can exclusively use a femto base station, new services have been devised which could not be serviced by macro base stations which are accessible from a large number of unspecified individuals.
Further, the wireless resources possessed by a femto base station are used only by a limited number of users, which helps to improve the ratio of occupancy by the respective users for the wireless resources. Consequently, a communication system including femto base stations can achieve an environment where uses can relish high-speed wireless communications.

Further, by connecting femto base stations to the carrier network through a public IP network and the like, the femto base stations become accessible from devices (e.g., server connecting to the public IP network) other than mobile terminals.
The following Patent Reference 1 discloses one known technique related to femto base stations, disclosing a system in which a femto base station having a tiny service area is installed inside a building and the femto base station collects IDs of terminal entering to the area and notifies a server of the IDs.

### PATENT REFERENCE(S)

Patent Reference 1: Japanese Laid-open Patent Publication No. 2008-283648

### DISCLOSURE OF THE INVENTION

### Problems to be Solved by the Invention

In recent years, due to Internet access capabilities of mobile terminals, e.g., mobile phones, comparable to those of non-mobile terminals, more information has increasingly obtained and an increasing number of services are accessed through the Internet, and hence the data volume is steadily growing.
Further, ever-improving performances of mobile terminals provide various options for services available to uses of the mobile terminals, and similar services are on the rise. As a result, available options of services/information have been diversified.

For exploiting such ever-complicating service/information options, new information delivery services have emerged which select information a user wishes and delivers it to that user. Such information delivery services, however, require interruptions by the uses (e.g., user registration and selection of services/information), which may annoy the users with the cumbersome operations.
On the other hand, with the diversification of and increase in services/information, valuable information accumulated in mobile terminals has become a focus of attention. For example, in a payment by mobile terminals using the Osaifu-Keitai feature, one electronic money system serviced by NTT DOCOMO, Inc. in Japan, if a mobile terminal is illegitimately used, significant losses may be incurred.

Although, enhancement of the security for information accumulated in mobile terminals has been emphasized against such a background, a large number of mobile terminals, e.g., mobile phones, are still misplaced. For example, although many corporations take measures for preventing such misplacements, users who misplace their mobile terminals somewhere outside their homes or offices amount to about 30 percents of the entire uses. Of these misplaced mobile terminals, about 80 percents are mobile phones.

One countermeasure to such issues is a remote lock function with which a user can lock his or her misplaced mobile terminal remotely (e.g., by restricting use of the mobile terminal), for example. However, such a function requires some user interventions.
This countermeasure is not effective if a user does not aware of loss of his or her mobile terminal, and a serious damage may be incurred if some time has been passes until the user is aware of the loss of the mobile terminal.

Accordingly, one object of the present invention is to provide user behavioral assistance by a wireless base station.

### SUMMARY

(1) A first aspect is a wireless base station capable of communicating with a wireless terminal, the wireless base station comprising: an analyzer that analyzes a pattern of a status of the wireless terminal; and a controller that provides the wireless terminal with information or a function based on the pattern.
(2) Further, a second aspect is a communication system comprising: a wireless terminal; a wireless base station capable of communicating with the wireless terminal; an analyzer that analyzes a pattern of a status of the wireless terminal; a controller that collects a service or information accessed by the wireless terminal, based on the pattern, and delivers the service or the information to the wireless terminal; and a receiver that receives the service or the information from the controller.

(3) Further, a third aspect is a communication system comprising: a wireless terminal; a wireless base station capable of communicating with the wireless terminal; an analyzer that analyzes a pattern of a status of the wireless terminal; and a controller that requests authentication processing to the wireless terminal, based on a comparison of a latest status of the wireless terminal with the pattern analyzed by the analyzer; an authentication unit that performs the authentication processing in response to the request from the controller; and a transmitter that sends a result of the authentication processing by the authentication unit to the wireless base station.

(4) Further, a fourth aspect is a method of controlling a communication in a communication system comprising a wireless terminal and a wireless base station capable of communicating with the wireless terminal, the method comprising: analyzing, by the wireless base station, a pattern of a status of the wireless terminal; collecting, by the wireless base station, a service or information to which the wireless terminal accesses, based on the analyzed pattern of the status, and delivering the service or the information to the wireless terminal; and receiving, by the wireless base station, the service or the information from the wireless base station.

(5) further, a fifth aspect is a method of controlling a communication in a communication system comprising a wireless terminal and a wireless base station capable of communicating with the wireless terminal, the method comprising: analyzing, by the wireless base station, a pattern of a status of the wireless terminal; requesting, by the wireless base station, authentication processing to the wireless terminal, based on a comparison of a latest status of the wireless terminal with the analyzed pattern; performing, by the wireless terminal, the authentication processing in response to the request; and sending, by the wireless terminal, a result of the authentication processing to the wireless base station.

### Effect of the Invention

A wireless base station can assist behaviors of a user.

### BRIEF DESCRIPTION OF THE DRAWINGS

FIG. 1 is a diagram illustrating an example of the configuration of a communication system in accordance with an embodiment;
FIG. 2 is a diagram illustrating an example of the configuration of a communication system in accordance with an embodiment;
FIG. 3 is a diagram illustrating an example of the configuration of a femto base station in accordance with an embodiment;
FIG. 4 is a diagram illustrating an example of the configuration of a mobile station in accordance with an embodiment;
FIG. 5 is a diagram illustrating an example of the operation of a communication system in accordance with an embodiment;
FIG. 6 is a diagram illustrating an example of a behavior management table;
FIG. 7 is a diagram illustrating an example of a behavior management table;
FIG. 8 is a diagram illustrating an example of the operation of a communication system in accordance with an embodiment;
FIG. 9 is a diagram illustrating an example of a service content management table;
FIG. 10 is a diagram illustrating an example of a service content management table;
FIG. 11 is a diagram illustrating an example of a behavior management table;
FIG. 12 is a diagram illustrating an example of a service content management table;
FIG. 13 is a diagram illustrating an example of the operation of a communication system in accordance with an embodiment;
FIG. 14 is a diagram illustrating an example of the operation of a communication system in accordance with an embodiment;
FIG. 15 is a diagram illustrating an example of a method of controlling a communication in accordance with an embodiment;
FIG. 16 is a flowchart illustrating an example of a method of controlling a communication in accordance with an embodiment;
FIG. 17 is a diagram illustrating an example of the operation of a communication system in accordance with an embodiment;
FIG. 18 is a diagram illustrating an example of the operation of a communication system in accordance with an embodiment;
FIG. 19 is a diagram illustrating an example of the operation of a communication system in accordance with an embodiment;
FIG. 20 is a diagram illustrating an example of the operation of a communication system in accordance with an embodiment;
FIG. 21 is a diagram illustrating an example of the operation of a communication system in accordance with an embodiment; and
FIG. 22 is a diagram illustrating an example of an unusual behavior management table.

### DESCRIPTION OF EMBODIMENTS

Hereunder is a description of embodiments with reference to the drawings. Note that the embodiments described below is described by way of example only, and various modifications and applications of techniques that are not provided explicitly in the following embodiments are not intended to be excluded. That is, the present embodiments can be practiced in various ways (by combining components and embodiments and functions, for example) without departing from the spirit thereof.

### (1) Embodiment

### (1.1) Example of Configuration of Communication System

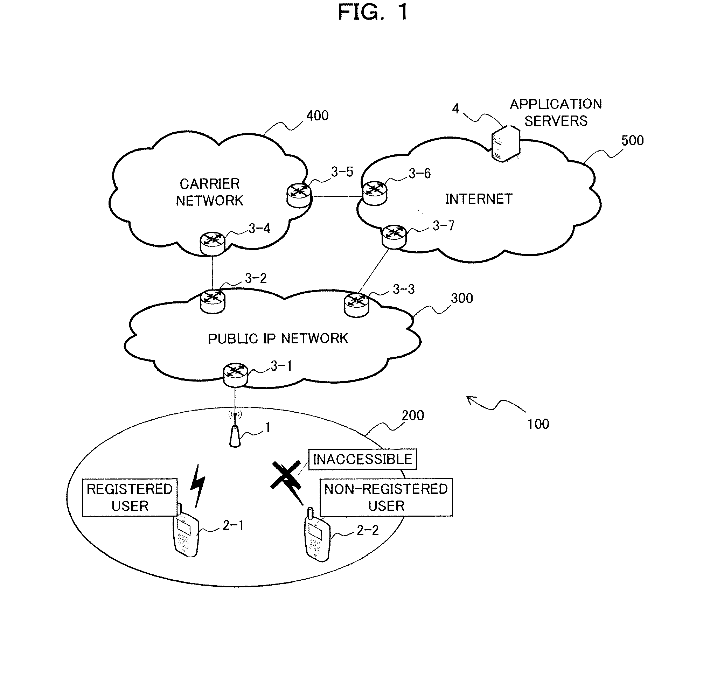

FIG. 1 is a diagram illustrating an example of the configuration of a communication system in accordance with an embodiment.

A communication system 100 depicted in FIG. 1 includes, a femto base station 1, mobile stations (e.g., wireless terminals) 2-1 and 2-2, a public IP network 300, a carrier network 400, and the Internet 500, for example. The mobile stations 2-1 and 2-2 may be simply referred to by the "mobile station 2" if no distinction is made among them. Further, the number of femto base station 1 and mobile stations 2 are not limited to the particular example depicted in FIG. 1, and the configuration of the communication system 100 is not intended to be limited to the particular example depicted in FIG. 1.

Here, the femto base station 1 may be a small wireless base station that allows accesses of the mobile stations 2, the users of which have been registered in advance to the femto base station 1 or the carrier (hereinafter, such uses are referred to as "registered user"). Note that this user registration may be done by a user when the user requests the femto base station 1 or the carrier network 400 to register and maintain the user's mobile station 2 to a predetermined database, for example.

In the example depicted in FIG. 1, a mobile station 2-1 of a registered user can communicate with the femto base station 1, whereas a mobile station 2-2 of a non-registered user cannot communicate with the femto base station 1.
Accesses by the mobile station 2-2 of the non-registered user can be blocked, for example, by checking the terminal identifier included in an access request from the mobile station 2-2 of the non-registered user, for example.

For example, in response to receiving an access request from the mobile station 2-2 of the non-registered user, the femto base station 1 determines that the access request is from the mobile station 2-2 of the non-registered user, based on the terminal identifier included in that access request.
The femto base station 1 may not respond to that access request or may send, to the mobile station 2-2, a response signal to indicate that an access is denied, thereby blocking an access from the mobile station 2-2.

The femto base station 1 provides a cover area 200 smaller than cover areas (e.g., wireless zones, such as cells and sectors) serviced by macro base stations located in the carrier network 400.
For the registered user (mobile station 2-1) within the cover area 200 serviced by the femto base station 1, various types of communication services are provided from the femto base station 1 and a application server group 4 through the public IP network 300.

Hereinafter, a mobile station 2 present in a cover area 200 serviced by a certain femto base station 1 may be referred to that the mobile station 2 is "visiting", whereas a mobile station 2 is not present in the cover area 200 may be referred that the mobile station 2 is "absent". Further, information related to the state of visiting or absence of the mobile station 2 may be referred to as the "visiting state".
The mobile stations 2 are wireless terminals that communicate with other communication devices via the femto base station 1 or a macro base station. The user-registered mobile station 2-1 is managed by the carrier. In other words, connection and communication of the user-registered mobile station 2-1 are controlled by the carrier, via the carrier network 400, the femto base station 1, or a macro base station.

Further, the public IP network 300 is an IP network provided by a network operator, such as the FTTH or ADSL, for example.
The carrier network 400 is a network, such as a cellular system, for example, owned by a carrier. Here, the carrier network 400 may include configurations and functions to manage subscriber information of the mobile stations 2 and to perform connection controls (e.g., call processing and transfer control) for the mobile stations 2, for example.

The application server group 4 is at least one server that provides various types of services and information to the mobile stations 2 and other devices.
The application server group 4 in this example is connected to the carrier network 400 and the public IP network 300 via the Internet 500, for example, and can deliver (provide) various services/information to the femto base station 1 and the mobile stations 2.

Here, the public IP network 300, the carrier network 400, and the Internet 500 may include gateway apparatuses 3-1 to 3-7 that connect other networks 300, 400, and 500 to the femto base station 1. It is noted that the gateway apparatuses 3-1 to 3-7 may be simply referred to by the "gateway apparatuses 3" if no distinction is made among them, and the number of gateway apparatuses is not limited to the particular example depicted in FIG. 1.

The gateway apparatuses 3 allow the networks 300, 400, and 500 of different protocols to be connected to each other. It is noted that relay apparatuses, e.g., routers, bridges, repeaters, and brouters, may be used in place of the gateway apparatuses 3, when connecting networks of the same protocol.
In the communication system 100 configured as described above, the user-registered mobile station 2-1 can enjoy (or, send and receive) various services/information, from the carrier network 400 and the application server group 4 via the femto base station 1.

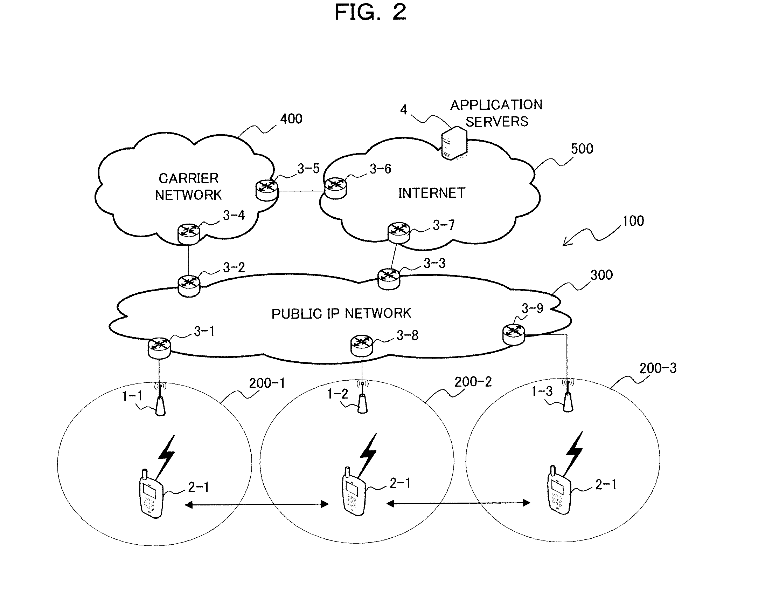

Alternatively, as illustrated in FIG. 2, the communication system 100 may include multiple femto base stations 1-1 to 1-3.
The communication system 100 illustrated in FIG. 2 is different from the system configuration illustrated in FIG. 1 in that the multiple femto base stations 1-1 to 1-3 are provided. It is noted that the femto base stations 1-1 to 1-3 may be simply referred to by the "femto base stations 1" if no distinction is made among them, and cover areas 200-1 to 200-3 may be simply referred to by the "cover areas 200" if no distinction is made among them.

Further, similar to the femto base station 1 depicted in FIG. 1, the femto base stations 1-1 to 1-3 service the cover areas 200-1 to 200-3, respectively.
The gateway apparatuses 3-8 and 3-9 connect the public IP network 300, and the femto base stations 1-2 and 1-3, respectively, and other elements are similar to the corresponding elements set forth above.

In the communication system 100 illustrated in FIG. 2, the mobile stations 2 switch connections to the femto base stations 1-1 to 1-3, when the mobile stations 2 migrate between the cover areas 200-1 to 200-3. Thus, the mobile stations 2 can receive services/information from the carrier network 400 and the application server group 4 without any interruption, before and after migrating between the femto base stations 1-1 to 1-3.

In this example, in the communication system 100 as described above, the femto base stations 1 collect information related to the visiting states, the communication statuses, and the like, of the mobile stations 2, and analyze the collected information. Based on the result of the analysis, the femto base stations 1 autonomously deliver services/information to mobile stations 2, even when there is no such request from the mobile station 2, and prevent illegitimate use of the mobile stations 2.
Hereinafter, the visiting state and the communication status of the mobile station 2 may be referred to as the behavior of the mobile station 2 or pattern of behaviors of the mobile stations 2, or the state of the mobile stations 2 or the pattern of statuses of the mobile stations 2.

### (1.2) Example of Method of Controlling Communications

As set forth above, a femto base station 1 can be used exclusively by an individual or particular user. In such a case, in the communication system 100 as described above, services/information are provided via a femto base station 1 to limited users.
Thus, in this example, the femto base station 1 can analyze the behavior of each mobile station 2, using steps which will be described later, for example.

Further, in the communication system 100, since the femto base station 1 and the carrier network 400 are connected to each other via the public IP network 300, the application server group 4 can access to the femto base station 1 via the public IP network 300.
Thereby, the application server group 4 can provide a service/information, based on the behaviors of a mobile station 2 (user) analyzed by the femto base station 1.

In this example, for example, each femto base station 1 analyzes the behavior of a mobile station 2 of a registered user, autonomously selects a service/information which the user probably wishes, based on the result of the analysis, and delivers the service/information to the mobile station 2, in the following steps (a1) to (e1).
Further, the femto base station 1 also provides an enhanced security by detecting illegitimate use of the mobile station 2, based on the result of the analysis.

It is noted that in this example, the following steps (a1) to (e1) may be performed by selectively using or appropriately combining the steps. Further, for better understanding of the present embodiment, an overview of each step will be described, and the details will be provided later in the steps (a2) to (e2) described later.

### (a1) Analysis of Visiting state of Mobile Station 2

Each femto base station 1 collects and analyzes visiting states of user-registered mobile stations 2 in the cover area 200 serviced by the femto base station.

The visiting states of the mobile stations 2 may be collected, by using call (paging) signals, which will be described later, for example.
Each femto base station 1 collects the visiting state (visiting or absence) of each mobile station 2 in each time period in a certain time duration, and analyzes the visiting states of that mobile station 2.

### (b1) Analysis of Communication status of Mobile Station 2

Further, each femto base station 1, if a mobile station 2 of a registered use is receiving a service/information from the application server group 4 or the like via the local station 1, monitors the content of data sent and received between the mobile station 2 and the application server group 4 or the like.

For example, the femto base station 1 analyzes the service/information received by the mobile station 2 by collecting and accumulating the content of the data (such as address information included in the data) in each time period in a certain time duration.

### (c1) Management of Result of Analysis

Each femto base station 1 manages the results of each analysis obtained in the above-described steps (a1) and (b1).

Here, the femto base station 1 classifies, for example, a behavior of a mobile station 2 that matches the result of the analysis as an "usual behavior" which is an legitimate and routine (usual) behavior of the mobile station 2, and other behaviors as "unusual behaviors" of the mobile station 2 which are illegitimate uses or irregular (unusual) uses of the mobile station 2.

### (d1) Collection and Delivery of Services/Information

Each femto base station 1, based on the result of the analysis of the communication status of a mobile station 2, autonomously collects and buffers services/information to be delivered to that mobile station 2.

The femto base stations 1 then delivers the buffered services/information to that mobile station 2, in accordance with a schedule that is compliant with the result of the analysis on the communication statuses of the mobile station 2.
For example, the femto base station 1 collects and buffers services/information routinely received by the mobile stations 2 in each time period from the application server group 4, prior to an access by the mobile station 2, and delivers the services/information to the mobile station 2 in the time period.

Thereby, the femto base station 1 can autonomously deliver a service/information requested by the mobile station 2 before the mobile station 2 request a delivery.

### (e1) Processing on Unusual Behavior

Each femto base station 1 monitors a latest behavior of each mobile station 2, and determines whether or not the latest behavior (e.g., the visiting state and the communication status) of the mobile station 2 matches the usual behavior defined from the result of the analysis, based on the result of the analysis obtained in the above-described steps (a1) and (b1). It is noted that a behavior of the mobile station 2 includes the visiting state and the communication status of the mobile station 2, for example.

For example, the femto base station 1 monitors the behavior of each mobile station 2 in each time period, and determines whether or not that behavior is a behavior deviating from the result of the analysis, in other words, whether or not that behavior is an unusual behavior.
If it is determined that the behavior of the mobile station 2 is an unusual behavior, the femto base station 1 then requests a user authentication, e.g., password authentication and biological authentication, to the mobile station 2. The femto base station 1 then determines whether or not the behavior is a legitimate behavior, based on the result of the user authentication.

Here, if it is determined that the behavior of the mobile station 2 is legitimate based on the result of the user authentication, the femto base station 1 reflects the detail of behavior to each result of the analysis to update the result of the analysis.
Otherwise, if it is determined that the behavior of the mobile station 2 is not legitimate based on the result of the user authentication, the femto base station 1 restricts or prohibits use of the mobile station 2, by notifying the carrier of the detection of the unusual behavior of the mobile station 2, for example. Alternatively, the carrier may restrict or prohibit use of the mobile station 2, in response to the notification of the detection of the unusual behavior of the mobile station 2 from the femto base station 1.

As described above, in this example, each femto base station 1 can autonomously select and deliver information which the user probably wishes, using the above-described steps (a1) to (e1).
Further, each femto base station 1 can autonomously detect and block illegitimate use of mobile terminals.

For these purposes, the femto base stations 1 and the mobile stations 2 in this example may include the following configurations, for example.

### (1.3) Example of Configuration of Femto Base Station 1

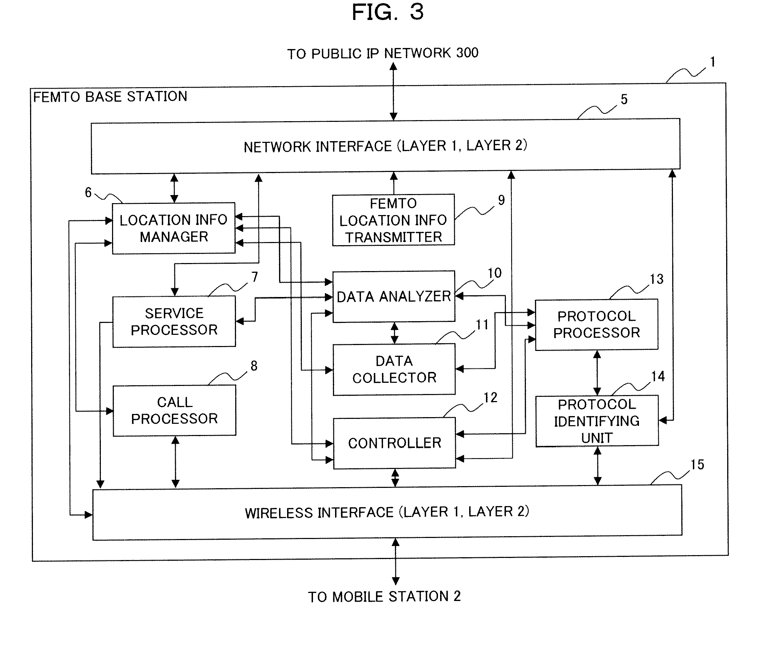

FIG. 3 is a diagram illustrating an example of the configuration of a femto base station 1 in accordance with an embodiment.
The femto base station 1 depicted in FIG. 3 includes, a network interface 5, a location information manager 6, a service processor 7, a call processor 8, a femto location information transmitter 9, a data analyzer 10, and a data collector 11, for example. The femto base station 1 also includes the femto base stations 1 includes, a controller 12, a protocol processor 13, a protocol identifying unit 14, and a wireless interface 15, for example.

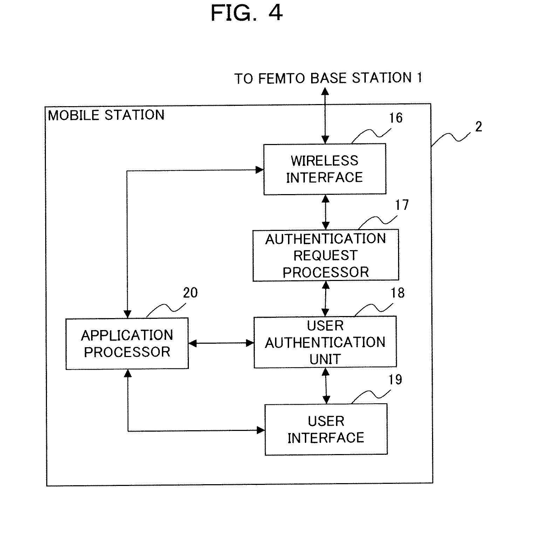

Here, the network interface 5 includes Layer 1 and Layer 2 communication interface functions for sending and receiving data between the femto base station 1 and the public IP network 300. The network interface 5 in this example is connected via a wire or wirelessly to the gateway apparatuses 3 provided in the public IP network 300, for example.
The wireless interface 15 includes Layer 1 and Layer 2 communication interface functions for sending and receiving data between the femto base station 1 and mobile stations 2. The wireless interface 15 in this example is wirelessly connected to a wireless interface 16 of a mobile station 2 (refers to reference symbol 16 in FIG. 4, for example).

The femto location information transmitter 9 notifies the carrier network 400 of location information of the femto base station 1. The location information is sent to a radio network controller (RNC) in the carrier network 400, for example.
From the information, the carrier can know location information of each femto base station 1. Since the carrier knows the location and the like of each femto base station 1, from the location information, the carrier can provide services/information to each femto base station 1 in a reliable manner.

The location information manager 6 collects and manages information related to visiting states, based on the location information of mobile stations 2 of registered users.
For example, when a mobile station 2 tries to commence a communication from a cover area 200 serviced by a femto base station 1, that mobile station 2 makes a location registration request to the femto base station 1 servicing the cover area 200.

The location registration request is sent to the carrier, via the wireless interface 15, the location information manager 6, the network interface 5, and the public IP network 300.
For this purpose, the location information manager 6 extracts identification information of the mobile station 2 included in that location registration request, and detects presence of the mobile station 2 corresponding to the identification information, for example. This can be done by femto base stations 1, by storing the identification information while relating it to the mobile station 2, upon user registration by the femto base station 1 or the carrier, for example.

The location information manager 6, upon receiving the location registration request, sends a call signal to that mobile station 2 via the call processor 8, at regular or irregular intervals. The call signal may be a paging signal, for example. The location information manager 6 can detect and collect the visiting state of the mobile station 2 by determining whether a response signal to that call signal is received within a certain time period.

The call processor 8 sends a call signal to a mobile station 2 of a registered user. A call signal is sent to the mobile station 2 in response to an instruction, using a control signal from the carrier network 400, or an instruction from the location information manager 6, for example.
It is noted that each femto base station 1 does not have to know visiting states of mobile stations 2 in cover areas 200 serviced by other femto base stations 1.

For example, if the femto base station 1-1 depicted in FIG. 2 detects absence of any mobile stations 2 in the cover area of the femto base station 1-1, femto base station 1-1 does not have to be aware of whether mobile stations 2 are visiting in the cover area of the femto base station 1-2 or the femto base station 1-3. This applies to other femto base stations 1-2 and 1-3.
It is noted that each femto base station 1 may be aware of the behaviors of mobile stations 2 by sharing information related to the visiting states of the mobile stations 2 via the carrier network 400 or the like.

The protocol identifying unit 14 identifies the protocol type of data sent and received between a mobile station 2 and the application server group 4.
The protocol type is identified based on the header section in the data, for example.
If the protocol identifying unit 14 in this example determines that the protocol type of data is the Hypertext Transfer Protocol (HTTP) based on the header section in the data and the like, the protocol identifying unit 14 may copy that data and pass the copy to the protocol processor 13.

If the protocol identifying unit 14 in this example determines that the protocol type of data is a non-HTTP protocol, the protocol identifying unit 14 may simply pass the data to the network interface 5 or the wireless interface 15.
The protocol processor 13 encodes the content of data in the HTTP protocol sent and received between the mobile station 2 and the application server group 4. The protocol processor 13 then obtains address information (uniform resource locator: URL) of the application server group 4 being accessed by the mobile station 2. The protocol processor 13 sends the address information to the data collector 11, together with the time period when the address information is obtained.

It is noted that the protocol identifying unit 14 and the protocol processor 13 may extract the sender address information of data of a non-HTTP protocol, e.g., the File Transfer Protocol (FTP), for example.
Thereby, each femto base station 1 can analyze services/information received by the mobile stations 2 and perform an autonomous delivery control on the services/information.

The data collector 11 collects information related to behaviors of the mobile stations 2. For example, the data collector 11 collects the visiting state of each mobile station 2 collected by the location information manager 6 and the communication status of each mobile station 2 collected by the protocol processor 13. Here, the "communication status" includes the address information of the connection destination and the time period when the communication is carried out, for example.
The collected information is stored in a database that is accessible from the data collector 11. It is noted that that database may be provided in the data collector 11, or may be provided inside or outside of each femto base station 1. Alternatively, the database may be shared by multiple femto base stations 1. The data collector 11 may update the records in the database when new information is collected, or the data collector 11 may delete (clear) the records in the database at regular or irregular intervals.

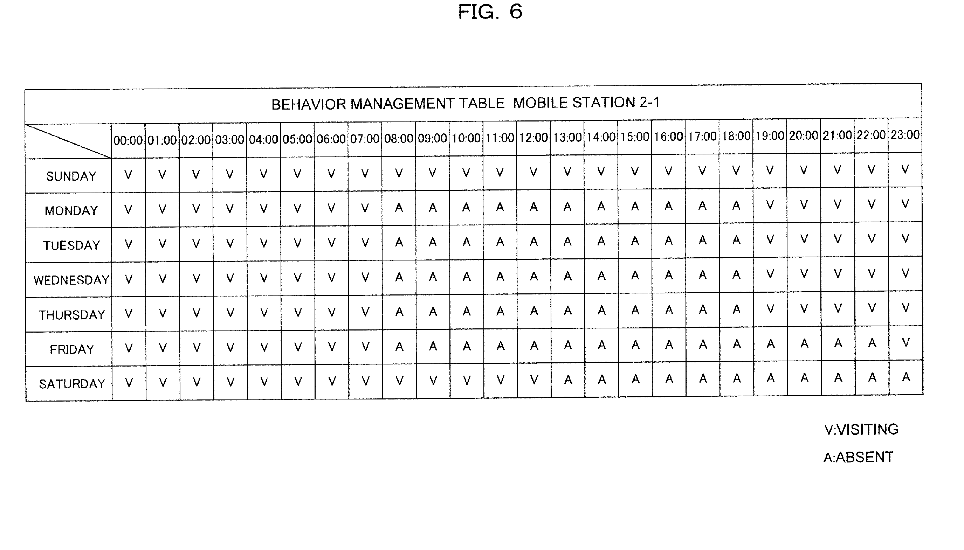

The data analyzer 10 analyzes a pattern of behaviors (usual pattern of behavior) of each mobile station 2 (user), based on information collected by the data collector 11, e.g., the visiting state and the communication status. The results of the analyses are kept in a table maintained for each mobile station 2, for example.
The data analyzer 10 in this example generates a behavior management table, which will be described later (refer to FIGS. 6, 7, and 11, for example), based on the visiting states of the mobile station 2, for example.

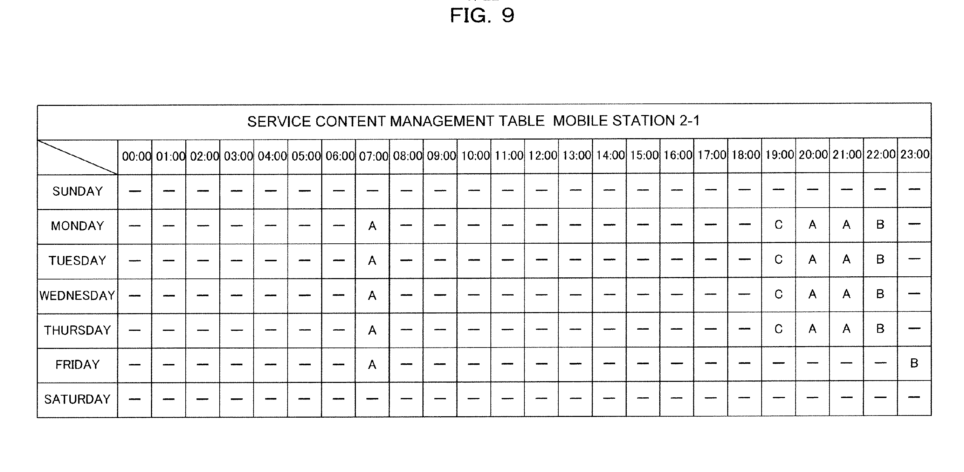

Further, the data analyzer 10 in this example generates a service detail management table, which will be described later (refer to FIGS. 9, 10, and 12, for example), based on the communication statuses of the mobile station 2, for example.
The above-described tables are employed by the femto base stations 1 for behavioral assistance for users. Here, the "behavioral assistance" refers to an autonomous and preemptive delivery of a service/information and an autonomous enhancement of security against illegitimate use of mobile stations 2, for example.

Here, the location information manager 6 has a function to determine whether the visiting state of the mobile station 2 is a usual behavior, based on the behavior management table generated by the data analyzer 10.
For example, if the visiting state of the mobile station 2 detected by the location information manager 6 does not match records in the behavior management table, the location information manager 6 determines that the behavior is an unusual behavior, and notifies the controller 12 that the behavior of the mobile station 2 is an unusual behavior. If the visiting state of the mobile station 2 detected by the location information manager 6 matches a record in the behavior management table, the location information manager 6 determines that the behavior is an unusual behavior and may not notify the controller 12.

Further, the protocol processor 13 has a function to determine whether or not the communication status of the mobile station 2 is an usual behavior, based on the service content management table generated by the data analyzer 10.
For example, if address information detected by the protocol processor 13 or the time period of the access does not match any of records in the service content management table, the protocol processor 13 determines that the behavior is an unusual behavior, and notifies the controller 12 that the behavior of the mobile station 2 is an unusual behavior. If connection destination address information of the mobile station 2 and the time period of that detected by the access the protocol processor 13 match records in the service content management table, the protocol processor 13 determines that the behavior is an usual behavior and may not notify the controller 12.

The service processor 7 autonomously collects services/information to be accessed by a mobile station 2, based on the result of the analysis at the data analyzer 10, and delivers the services/information to the mobile station 2.
For example, the service processor 7 autonomously obtains services/information to be delivered to the mobile stations 2 from the application server group 4 or the like, based on the records in the service content management table generated by the data analyzer 10.

The service processor 7 then sends the obtained services/information to the mobile stations 2, in line with the schedule in accordance with the service content management table, for example.
The controller 12 requests a user authentication to a mobile station 2, based on a notification as described above, from the location information manager 6 and/or protocol processor 13.
For example, it is determined by the location information manager 6 and/or protocol processor 13 that mobile stations 2 made an unusual behavior, the controller 12 receives a notification that the behavior of the mobile station 2 is an unusual behavior. The controller 12 then requests a user authentication to the mobile station 2, or reports (notifies) the carrier network 400 that the behavior of the mobile station 2 is an unusual behavior, in case of misplacement or theft of that mobile stations 2. Alternatively, the carrier network 400, in response to receiving a notification that the behavior of the mobile station 2 is an unusual behavior, may request a user authentication to the mobile station 2.

If it is determined that the mobile station 2 is illegitimately used from a result of the user authentication, the controller 12 may restrict or prohibit use of the mobile station 2, or notify the carrier of the illegitimate use, for requesting the carrier to restrict or prohibit use of the mobile station 2, for example.
Otherwise, if it is determined that the behavior of the mobile stations 2 was made by a legitimate user from the result of the user authentication, the controller 12 notifies the data analyzer 10 that the behavior of the mobile stations 2 is an usual behavior, for example. Thereby, the data analyzer 10 can reflect that behavior to the table record to update the information, thereby improving the accuracy of subsequent determinations.

That is, the service processor 7 and the controller 12 in this example function as an example of a controller that provides information or a function to a mobile station 2, based on an result of the analysis by the data analyzer 10.
As described above, the femto base stations 1 in this example can analyze of a pattern of behaviors (usual pattern of behavior) of mobile station 2 (user) and deliver services/information, based on the pattern of behaviors.

Further, the femto base stations 1 in this example can request a user authentication to a mobile station 2 if the mobile station 2 makes a behavior deviate from the usual pattern of behaviors, thereby improving the security.

### (1.4) Example of Configuration of Mobile Station 2

Next, an example of the configuration of a mobile station 2 in accordance with an embodiment will be described with reference to FIG. 4.

The mobile stations 2 depicted in FIG. 4 includes, for example, a wireless interface 16, an authentication request processor 17, a user authentication unit 18, a user interface 19, and an application processor 20.
The wireless interface 16 includes a communication interface function for sending and receiving data between the mobile station 2 and femto base stations 1. The wireless interface 16 in this example is wirelessly connected to a wireless interface 15 in a femto base station 1, for example.

The user interface 19 includes an input interface function for receiving an input from the user and passing the input to the processors 18 and 20. Various types of input interfaces, such as a sound input interface, a key input interface, and an image/video input interface, for example, may be used as the user interface 19 in this example.
The application processor 20 executes a variety of application processing when the mobile station 2 makes a voice call or a data (e.g., packet) communication. The application processing is provided by application programs and the operating system (OS) installed in the mobile station 2, for example. It is noted that the application processor 20 in this example may include a user authentication function.

That is, the wireless interface 16 and the application processor 20 in this example function as an example of a receiver that receives a service/information delivered from a femto base station 1.
The authentication request processor 17 receives a user authentication request from a femto base station 1 or the carrier network 400, and requests user authentication processing to the user authentication unit 18.
Further, the authentication request processor 17, when receiving a result of the user authentication from the user authentication unit 18, sends the result to the femto base stations 1 or the carrier network 400.

That is, the authentication request processor 17 in this example functions as an example of a transmitter that sends the result of the authentication at user authentication unit to the femto base station 1.
The user authentication unit 18 performs user authentication processing, based on the user authentication processing request from the authentication request processor 17. A password authentication or a biological authentication may be performed as the user authentication processing, as discussed above.

For example, the user authentication unit 18, in response to receiving a user authentication request from the authentication request processor 17, prompts a user to supply a password or biological information via the user interface 19, and performs user authentication processing based on the supplied input.
It is noted that the user authentication function may be provided by the user authentication unit 18 or the application processor 20.

In the manner described above, the mobile station 2 in this example can perform user authentication processing, in response to a user authentication request from the femto base station 1 or the carrier network 400.
The femto base station 1 then determines whether or not the behavior of the mobile station 2 is legitimate by determining legitimacy of the user using the mobile station 2, based on the result of the user authentication.

The femto base station 1 can restrict or prohibit use of the mobile station 2 based on the determination. This can lead to prevention of illegitimate use of the mobile station 2, and enhancement of the security in the communication system 100.
Next, an example the operation of the communication system 100 in this example will be described.

### (1.5) Example of Operation of Femto Base Station 1

### (a2) Analysis of Visiting state of Mobile Station 2

For user-registered mobile stations 2, a femto base station 1 analyzes the visiting state of each mobile station 2 by collecting the visiting state (visiting or absence) of the mobile station 2 in each time period in a certain time duration by using a call signal, for example.

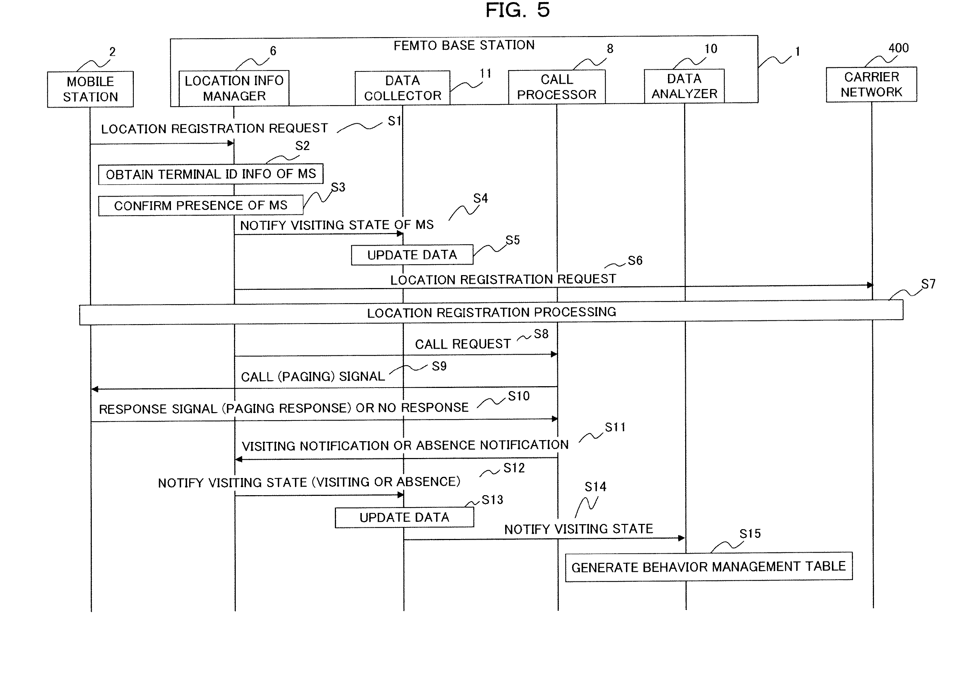

First, as illustrated in FIG. 5, once a location registration request is made to a femto base station 1 by a user-registered mobile station 2 (Step S1), the location information manager 6 obtains the terminal identifier of the mobile station 2 included in that location registration request (Step S2).
The location information manager 6 then confirms presence of the mobile station 2 corresponding to the obtained the terminal identifier (Step S3), and notifies the data collector 11 of a visiting state indicating that the mobile station 2 is visiting in the cover area of the femto base station 1 (Step S4). The visiting state may also include information related to the time period when the mobile station 2 is visiting, for example.

The data collector 11 then stores the visiting state sent from the location information manager 6 in a database, thereby updating the records in the database (Step S5).
Further, the location information manager 6 makes a location registration request for the mobile stations 2 to the carrier network 400, based on the location registration request from the mobile station 2 (Step S6).
This can enable the carrier network 400 to start managing and controlling the mobile station 2, and delivery of services/information to that mobile station 2.

After the above-described processing in Steps S1 to S6, a series of location registration processing is performed among the mobile station 2, the femto base station 1, and the carrier network 400 (Step S7), the details of which are omitted here.
Subsequent to the above-described location registration processing, the location information manager 6 makes a call request to the call processor 8 at regular or irregular intervals (Step S8).

In response to receiving the call request, the call processor 8 sends a call (paging) signal to the mobile station 2 (Step S9).
If the mobile station 2 is visiting in the cover area of the femto base station 1 in the time period when the call processor 8 makes the call signal, the mobile station 2 can receive that call signal. In response to receiving call signal, the mobile station 2 sends a response signal (paging response) for the call signal, to the call processor 8 (Step S10).

Upon receiving the response signal from the mobile station 2, the call processor 8 notifies the location information manager 6 of visiting of the mobile station 2 (Step S11).
Otherwise, if the mobile station 2 is absent in the cover area of the femto base station 1 in the time period when the call processor 8 makes the call signal, the mobile station 2 cannot receive that call signal. For that reason, the mobile station 2 does not send a response signal even after a certain time duration elapses.

In such a case, if no response signal is received from the mobile station 2 during the certain time duration, the call processor 8 determines that the mobile station 2 did not respond (Step S10).
The call processor 8 then determines that the mobile station 2 is absent based on absence of response from the mobile station 2, and notifies the location information manager 6 of absence of the mobile station 2 (Step S11).

The location information manager 6 notifies the data collector 11 of the visiting state (visiting or absence) of the mobile station 2 in the time period when the call signal was sent, based on the notification of visiting or absence sent from the call processor 8 (Step S12).
The data collector 11 stores, in a database, information related to the visiting state of the mobile station 2, based on the visiting state (visiting or absence) sent from the location information manager 6, to update the database (Step S13).

Here, by repeating the above-described Steps S8 to S13 by the femto base station 1 and the mobile station 2, it is possible to collect the pattern of behaviors (visiting states) of the mobile station 2 in a certain time period (e.g., a day, a week, a month, a year). It is noted that the certain time period may be set by the carrier network 400, or may be set to the femto base stations 1 by an administrator, for example.

The data collector 11 then notifies the data analyzer 10 of the visiting state collected from the location information manager 6 (Step S14). The data collector 11 may collectively notify the data analyzer 10 of the collected visiting states in a batch, after certain time duration, or a visiting state of the mobile station 2 may be notified every time that visiting state is collected.
The data analyzer 10 analyzes a pattern of a behavior (visiting or absence) of the mobile station 2 (usual pattern of behavior) based on the visiting state notified from the data collector 11, in accordance with a predetermined rule, and generates a behavior management table from the result of the analysis (Step S15). The behavior management table is a table indicating the visiting states of the mobile station 2 in each time period in certain time duration. As set forth above, a behavior of a mobile station 2 that matches a record in the behavior management table is classified as an usual behavior, while other behaviors are classified as unusual behaviors.

Here, an example of the behavior management table is depicted in FIG. 6.
In the behavior management table illustrated in FIG. 6, the visiting states of the mobile station 2-1 in each time period in a week are maintained. That is, in the example depicted in FIG. 6, the femto base station 1 collects and analyzes the visiting state of the mobile station 2-1 by sending a call signal to the mobile station 2-1 every hour.

This behavior management table illustrated in FIG. 6 indicates that the mobile station 2-1 was absent from 8 : 00 to 18: 59 from Monday through Thursday, from 8:00 to 22:59 on Friday, and from 13:00 to 23:59 on Saturday.
The behavior management table also indicates that the mobile station 2-1 was visiting in the cover area 200 serviced by the femto base station 1 in the other time periods.

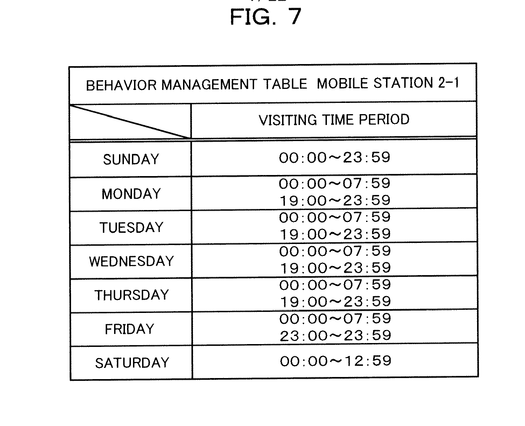

It is noted that the femto base station 1 may also have similar behavior management tables for the other mobile stations 2-2 and 2-3, for example.
Further, the behavior management table depicted in FIG. 6 is merely exemplary, and the certain time period and the timing when to send call signals described above may be modified where appropriate.
Alternatively, the femto base stations 1 may use a behavior management table as depicted in FIG. 7.

This behavior management table illustrated in FIG. 7 records time periods when the mobile station 2-1 was visiting on each day of a week. It is noted that the behavior management table depicted in FIG. 7 is merely exemplary, and time periods when the mobile station 2 is absent may be recorded, for example.
The size of data stored in the femto base stations 1 can be reduced by designing an efficient behavior management table.

### (b2) Analysis of Communication status of Mobile Station 2

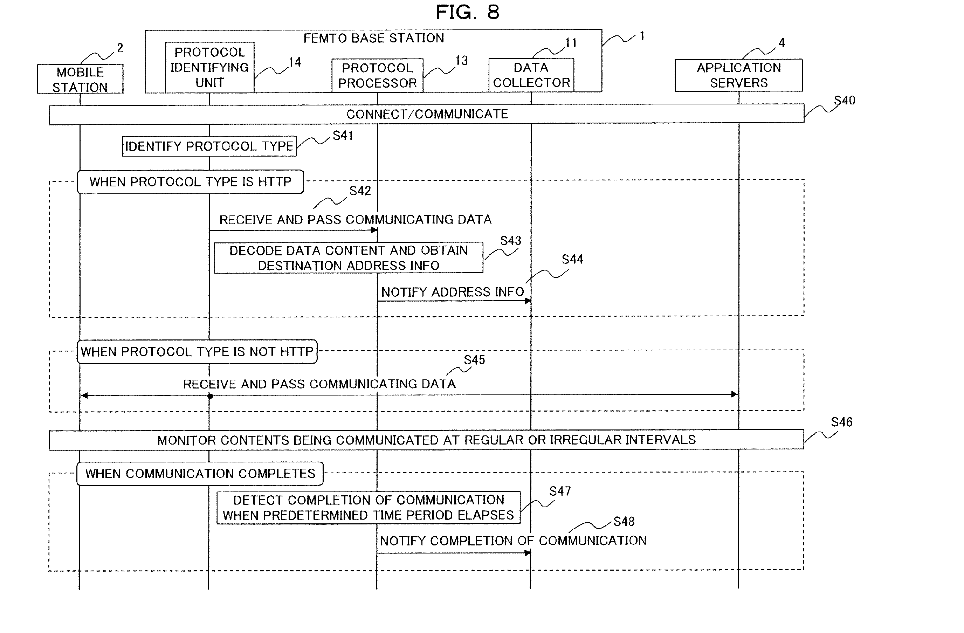

Further, the femto base stations 1 monitor data sent and received between the mobile stations 2 and the application server group 4, collect address information included in the data and the time period when the data is exchanged, and analyze details of services/information provided to the mobile stations 2.
Firstly, once a series of processing related to the above-described location registration request completes, as illustrated in FIG. 8, the mobile station 2 is connected to the carrier network 400 via the femto base station 1, which enables the mobile station 2 to perform a data communication with the application server group 4 (Step S40).

During the data communication, the protocol identifying unit 14 identifies the protocol type of data sent or received by the mobile station 2 (Step S41). It is noted that the protocol type may be identified, based on information (e.g., protocol header) included in the header section in the data, for example.
If the protocol type of the data sent or received by the mobile station 2 is identified as the HTTP, the protocol identifying unit 14 copies the data and passed the copied data to the protocol processor 13 (Step S42).

In response to receiving the data from the protocol identifying unit 14, the protocol processor 13 encodes the content of the data to obtain the sender (or destination) address information in the data (Step S43).
Thereby, the femto base station 1 can obtain the address of the application server to which the mobile station 2 connects, or the URL of the services/information received by the mobile station 2, for example.

The protocol processor 13 then notifies the data collector 11 of the obtained address information, together with the obtained time period (Step S44).
Otherwise, if the protocol type of the data sent or received by the mobile station 2 is a non-HTTP protocol, the protocol identifying unit 14 passes the data to the mobile station 2 or the application server group 4, via the interface 5 or 15, respectively (Step S45).

As described above, the data collector 11 can collect, analyze, and maintain the communication status of the mobile station 2 in each time period in a certain time duration.
The processing in the above-described Steps S41 to S45 may be repeated at regular or irregular intervals, while the mobile station 2 and the application server group 4 communicate with each other (Step S46).

If a certain duration elapses after the mobile station 2 and the application server group 4 communicated last, the protocol processor 13 determines that the communication has ended (Step S47). The protocol processor 13 notifies the data collector 11 of the completion of the communication (Step S48).
In response to being notified of the completion of the communication, the data collector 11 notifies the data analyzer 10 of the address information and the information related to the time period collected from the protocol processor 13. The data collector 11 may collectively notify the data analyzer 10 of the corrected address information and information related to the time periods in a batch, after completion of the communication, or the address information and information related to the time period may be notified every time the information is collected.

The data analyzer 10 analyzes a pattern of details of services and information (e.g., the connection destination address and the connection time period) provided to the mobile station 2, based on the address information and the information related to the time period notified from the data collector 11.
The data analyzer 10 then generates a service content management table based on the result of the analysis. As set forth above, a behavior of a mobile station 2 that matches a record in the service content management table is classified as an usual behavior, while other behaviors are classified as unusual behaviors. It is noted that behaviors of the mobile station 2 as used herein mean the communication status of the mobile station 2, for example.

Here, an example of the service content management table is depicted in FIG. 9.
In the service content management table illustrated in FIG. 9, the communication statuses of the mobile station 2-1 in each time period in a week are recorded.
This service content management table illustrated in FIG. 9 indicates that the mobile station 2-1 receives a particular service (Web Service A) from 7:00 to 7: 59 on Monday through Friday, and from 20:00 to 21:59 on Monday through Thursday. The service content management table illustrated in FIG. 9 also indicates that the mobile station 2-1 receives another service (Web Service C) from 19:00 to 19:59 on Monday through Thursday. The table also indicates that the mobile station 2-1 receives a further service (Web Service B) from 22:00 to 22:59 on Monday through Thursday, and from 23:00 to 23:59 on Fridays.

The types of the web services listed in the above tables may be classified based on the URLs, or based on the service types.
The femto base station 1 may also have similar service content management tables for the other mobile stations 2-2 and 2-3, for example.
It is noted that the service content management table depicted in FIG. 9 is merely exemplary, and the time duration and the time period for monitoring the communication status of the mobile station 2 may be modified where appropriate.

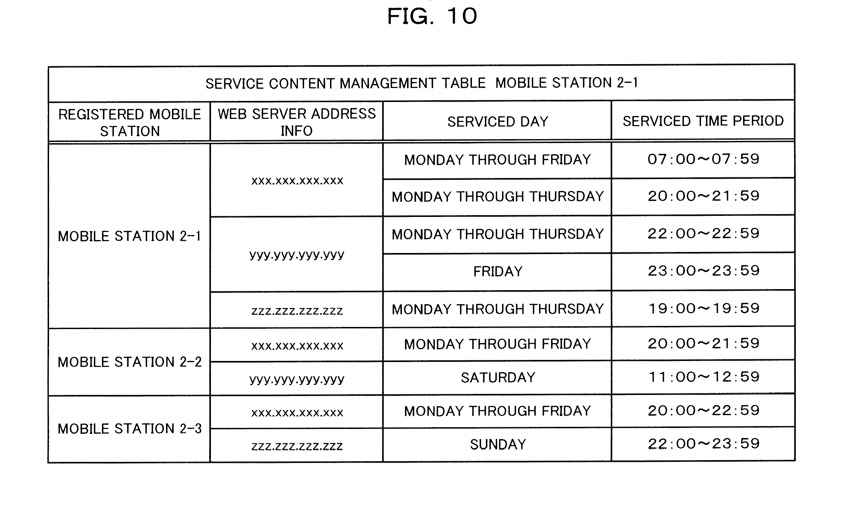

Alternatively, the femto base stations 1 may have a service content management table as depicted in FIG. 10.
In this service content management table illustrated in FIG. 10, the "xxx.xxx.xxx.xxx" in the web server address information indicates the URL of the application server providing the Web Service A. Similarly, the "yyy.yyy.yyy.yyy" indicates the URL of the application server providing the Web Service B, and the "zzz.zzz.zzz.zzz" indicates the URL of the application server providing the Web Service C.

The size of data stored in the femto base stations 1 can be reduced by designing an efficient service content management table.

### (c2) Management of Result of Analysis

The femto base stations 1 maintain behavior management tables and/or service content management tables as described above, and autonomously deliver services/information to the mobile stations 2 or enhance the security by detecting illegitimate use of the mobile stations 2, based on the records in the tables.

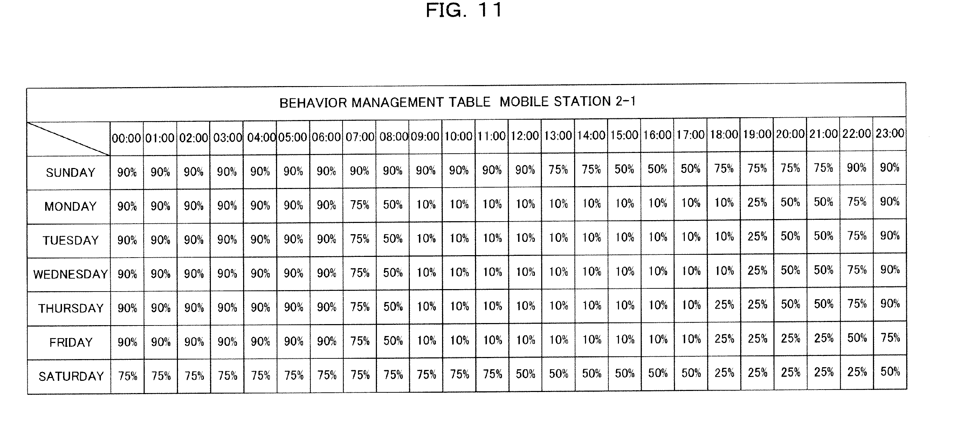

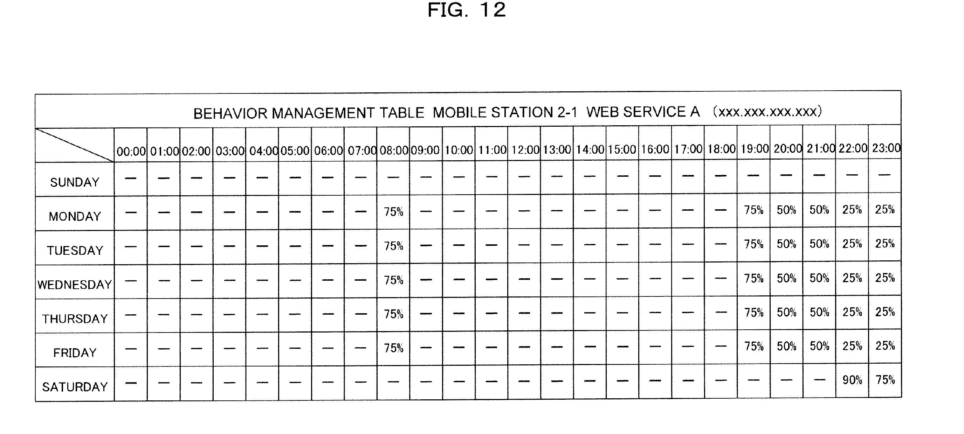

The femto base stations 1 may perform the above-described processing using the obtained tables without modifying the tables, or after modifying the tables.
Variations of tables are illustrated in FIGS. 11 and 12.
FIG. 11 is an example of a behavior management table that records the probabilities of visiting of a mobile station 2 in each time period in certain time duration.

The femto base station 1 can collect the visiting states of the mobile station 2 for a middle to longer term, for example, and calculate the probability of visiting of the mobile station 2 in each time period in a certain time duration through a statistical analysis.
Thereby, the femto base station 1 can predict that the mobile station 2 is visiting in a time period if the probability of visiting is equal to or greater than a predetermined threshold, while predict that the mobile station 2 is not visiting in a time period if the probability of visiting is smaller than the predetermined threshold.

Hence, various controls and processing performed based on the visiting state of the mobile station 2 can be executed more flexibly.
It is noted that when a behavior management table as depicted in FIG. 11 is used, the femto base station 1 may update the records in the tables based on information related to visiting states collected by the data collector 11. This can help to improve the precision of prediction of the visiting state of the mobile station 2.

Further, as illustrated in FIG. 12, the femto base station 1 may maintain the probability (or ratio) of usage of services/information by the mobile station 2 in each time period in a certain time duration, in the service content management table.
The example depicted in FIG. 12 illustrates the probability (or ratio) of usage of the Web Service A by the mobile station 2-1 in each time period in a certain time duration.

By collecting the details of services for the mobile station 2 for a middle to longer term, for example, the femto base station 1 can calculate the probability (ratio) of the services by the mobile station 2 in each time period through a statistical analysis.
Thereby, the femto base station 1 can determine that the probability that the mobile station 2 uses a particular service (e.g., Service A) is high when the probability of usage of that service is equal to or greater than a predetermined threshold, and collect data related to that service, preemptively to a request from the mobile station 2.

If it is probable that the mobile station 2 uses another service (e.g., Service B or C) in the time period, the femto base station 1 may also collect data related to that service.
Further, the femto base station 1 may maintain a service content management table for each service as illustrated in FIG. 12, for other mobile stations 2.

Further, the tables illustrated in FIGS. 11 and 12 may be modified as depicted in FIGS. 7 and 10, respectively.

### (d2) Collection and Delivery of Services/Information

Next, the femto base station 1 autonomously collects services/information to be delivered to the mobile station 2 based on the record in the service content management table, for example, and delivers the collected services/information preemptively to an access request from the mobile station 2.

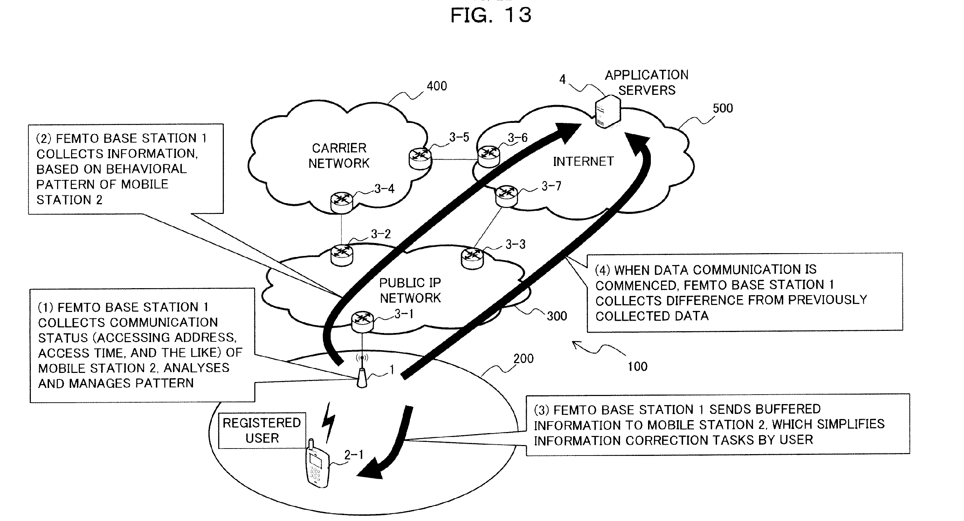

As illustrated in FIG. 13, firstly, the femto base station 1 collects the communication status of the mobile station 2 (e.g., address information and the access time), as described in the above step (b2).
The femto base station 1 then records and maintains the communication status of the mobile station 2 (usage state of the services/information) in a service content management table, as described in the above step (c2).
Next, the femto base station 1 autonomously collects services/information to be delivered to the mobile station 2 from the application server group 4 or the like, based on the usual pattern of behaviors of the mobile station 2 recorded in the service content management table.

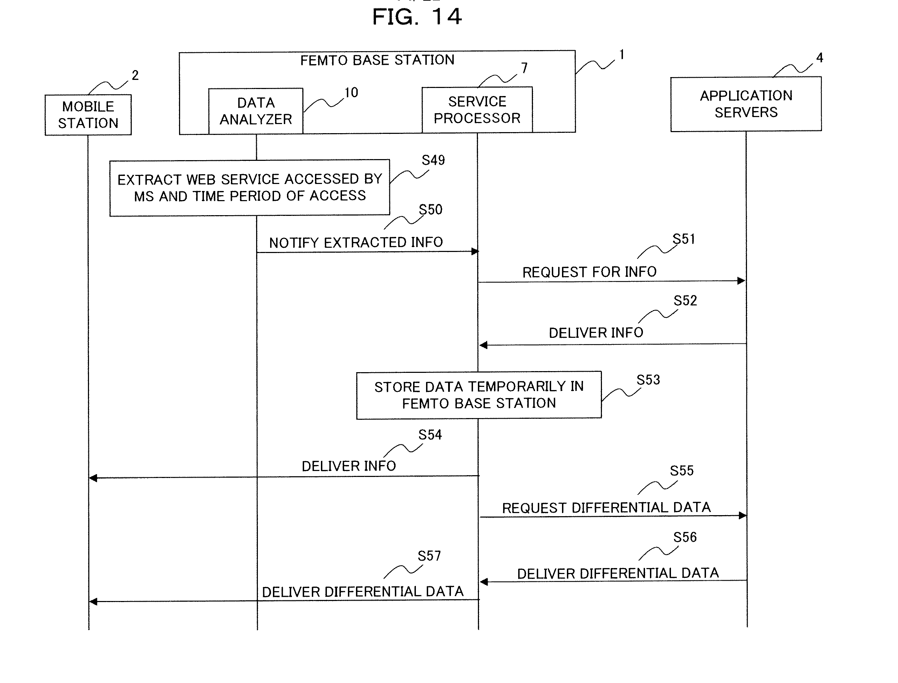

Specifically, as illustrated in FIG. 14, the data analyzer 10 extracts the web service accessed by the mobile station 2 and the time period of the access based on the service content management table (Step S49), and notifies the service processor 7 of the extracted information (Step S50). The service processor 7 then requests the application server group 4 for information for the web service, via the network interface 5 (Step S51). In response to receiving an information delivery request from the service processor 7, the application server group 4 sends the requested information to the service processor 7 (Step S52).

Next, the femto base station 1 buffers data autonomously collected from the application server group 4 or the like, and delivers the data to the mobile station 2 in a time period when the data is to be delivered, based on the service content management table.
Specifically, as illustrated in FIG. 14, the femto base station 1 temporarily stores the information collected by the service processor 7 from the application server group 4, into the buffer provided in that femto base station 1 (Step S53).

The service processor 7 then finds the particular time period when the information is to be delivered, from a record in the service content management table, and delivers the information to the mobile station 2 in that specific time period, via the wireless interface 15 (Step S54).
Further, once the data communication with the user is commenced, the femto base station 1 accesses the application server group 4 and determines whether or not the data has been updated. If it is determined that the data has been updated, the femto base station 1 may obtain a difference from the data collected by the femto base station 1 and data updated in the application server group 4 and deliver the difference to the mobile station 2.

Specifically, as illustrated in FIG. 14, the service processor 7 requests difference data from the collected information, to the application server group 4 (Step S55).
In response to receiving the request, the application server group 4 delivers the difference data to the service processor 7 (Step S56). Subsequently, the service processor 7 delivers, to the mobile station 2, the difference data delivered from the application server group 4 (Step S57).

It is noted that the femto base station 1 may inquire the mobile station 2 as to whether to deliver the collected information. In response to the inquiry from the femto base station 1, the mobile station 2 may respond as to whether to receive the information corrected by the femto base station 1.
As described above, in this example, since the femto base station 1 autonomously collects and deliver services/information based on a usual pattern of behaviors of the mobile station 2, the user do not have to do any operations or procedures to receive the services/information.

Further, when autonomously collecting information from the application server group 4, the femto base station 1 can collect the information in a time period when the network is not congested or collect some parts of information in multiple time periods. This can help to reduce the network traffic.

### (e2) Processing on Unusual Behavior

Further, each femto base station 1 determines whether or not a behavior of a mobile station 2 (e.g., visiting state and communication status) is a usual behavior based on each result of the analysis managed in, step (c1).

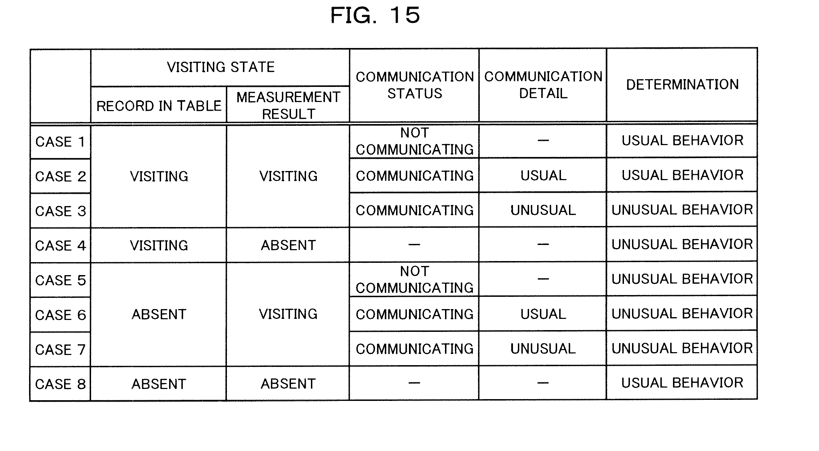

If the femto base station 1 determines that the behavior of the mobile stations 2 is not a usual behavior (i.e., is an unusual behavior), the femto base station 1 requests a user authentication to the mobile station 2 to check whether that behavior is done by an legitimate user (registered user) (whether or not the behavior is legitimate).
Here, when the femto base station 1 determine whether or not behavior of the mobile stations 2 (latest measurement result) is an unusual behavior, based on records in the management table and the service content management table, the scenarios as depicted in FIG. 15 are possible.

As in Scenarios 1 to 3 in FIG. 15, the visiting state of a mobile station 2 determined by a call signal is visiting in the time period when the record in the behavior management table is "visiting", the femto base station 1 can determine that the visiting state of the mobile station 2 is a usual behavior.
Therefore, the femto base station 1 then determines whether or not the behavior of the mobile station 2 is an unusual behavior, based on the record in the service content management table.

For example, if the femto base station 1 cannot detect any data being sent or received by the mobile station 2, the femto base station 1 can determine that the mobile station 2 is not illegitimately used and the behavior of the mobile station 2 is a usual behavior (Scenario 1).
For example, even when the femto base station 1 detects data being sent or received by the mobile station 2, if the content of the data matches a record in the service content management table, the femto base station 1 can conclude that the mobile station 2 is not illegitimately used and the behavior of the mobile station 2 is a usual behavior (Scenario 2).

More specifically, if the mobile station 2 uses Web Service A in a time period when Web Service A is usually used, for example, the femto base station 1 determines that the behavior is a usual behavior.
Otherwise, if the content of data being sent or received by the mobile station 2 does not match any of records in the service content management table, the femto base station 1 can conclude that the mobile station 2 is illegitimately used and the behavior of the mobile station 3 is an unusual behavior (Scenario 3).

More specifically, if the mobile station 2 uses Web Service B in a time period when Web Service A is usually used, for example, the femto base station 1 determines that the behavior is an unusual behavior.
Further, as in Scenario 4 in FIG. 15, the visiting state of a mobile station 2 determined by a call signal is absent in the time period when the record in the behavior management table is "visiting", the femto base station 1 can determine that the behavior (visiting state) of the mobile station 2 is an unusual behavior.

Further, as in Scenarios 5 to 7 in FIG. 15, the visiting state of a mobile station 2 determined by a call signal is visiting in the time period when the record in the behavior management table is "absent", the femto base station 1 can determine that the behavior (visiting state) of the mobile station 2 is an unusual behavior.
That is, in the above-described Scenarios 5 to 7, the femto base station 1 can determine that the behavior of the mobile station 2 is an unusual behavior, irrespective of the communication status of the mobile station 2.

In contrast, as in Scenario 8 in FIG. 15, the visiting state of a mobile station 2 determined by a call signal is absent in the time period when the record in the behavior management table is "absent", the femto base station 1 can determine that the behavior (visiting state) of the mobile station 2 is a usual behavior. Since the mobile station 2 is absent in this case, the femto base station 1 cannot detect communication data of that mobile station 2 as a matter of course.

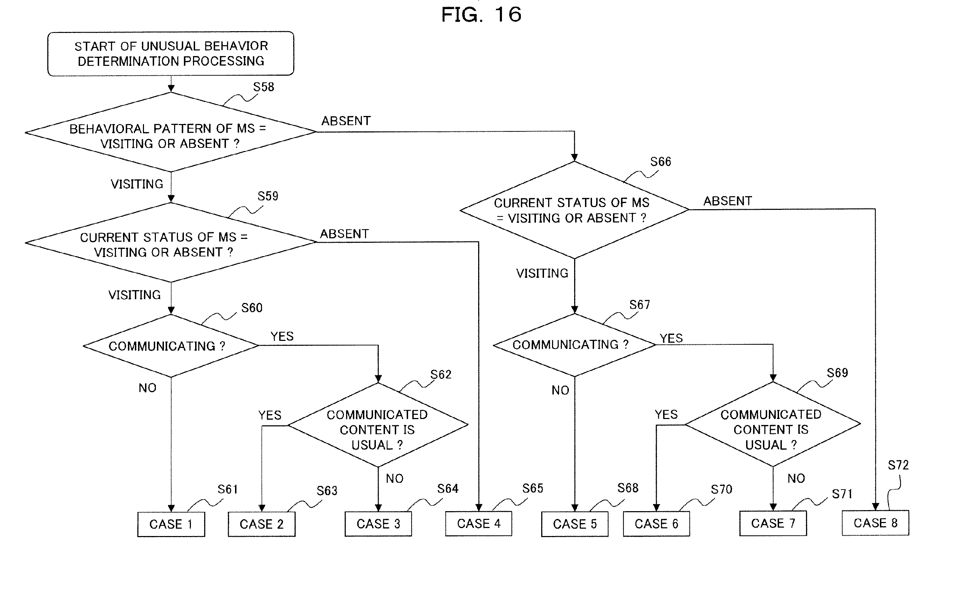

Whether or not the behavior of the mobile station 2 corresponds to either of the above-described Scenarios 1 to 8 is determined in accordance with the flowchart depicted in FIG. 16, for example.
In FIG. 16, firstly, the femto base station 1 determines whether the usual pattern of behaviors (visiting state) of the mobile station 2 in the present time period is visiting or absent, based on the behavior management table (Step S58).

If it is determined that the visiting state of the mobile station 2 in that time period is visiting (the "visiting" route in Step S58), the femto base station 1 determines the actual visiting state of the mobile station 2 by sending a call signal and responding a response, for example (Step S59).
If the actual visiting state of the mobile station 2 is determined as absent in this step (the "absent" route in Step S59), the femto base station 1 determines that the actual behavior of the mobile station 2 is an unusual behavior (Scenario 4) since this determination does not match records in the behavior management table (Step S65).

Otherwise, if the actual visiting state of the mobile station 2 is determined as visiting (the "visiting" route in Step S59), the femto base station 1 then determines whether or not the mobile station 2 is communicating (Step S60).
If it is determined that the mobile stations 2 is not communicating (the NO route in Step S60), the femto base station 1 determines that the actual behavior of the mobile station 2 is a usual behavior (Scenario 1) (Step S61).

Further, if it is determined that the mobile stations 2 is communicating (the YES route in Step S60), the femto base stations 1 then determines whether or not the content of that communication matches a record in the service content management table (usual pattern of behavior) (Step S62).
If it is determined that the content of the communication by the mobile station 2 matches a record in the service content management table (usual pattern of behavior) (the YES route in Step S62), the femto base station 1 determines that the actual behavior of the mobile station 2 is a usual behavior (Scenario 2) (Step S63).

Otherwise, if it is determined that the content of the communication by the mobile station 2 does not match any of records in the service content management table (usual pattern of behavior) (the NO route in Step S62), the femto base station 1 determines that the actual behavior of the mobile station 2 is an unusual behavior (Scenario 3) (Step S64).
Further, if it is determined that the visiting state of the mobile station 2 in that time period is absent in Step S58 (the "absent" route in Step S58), the femto base station 1 determines the actual visiting state of the mobile station 2 to determine whether the mobile station 2 is visiting or absent (Step S66).

If the actual visiting state of the mobile station 2 is determined as absent in this step (the "absent" route in Step S66), the femto base station 1 determines that the actual behavior of the mobile station 2 is a usual behavior (Scenario 8) since this determination matches a record in the behavior management table (Step S72).
Otherwise, if the actual visiting state of the mobile station 2 is determined as visiting (the "visiting" route in Step S66), the femto base station 1 then determines whether or not the mobile station 2 is communicating (Step S67).

If it is determined that the mobile station 2 is not communicating (the NO route in Step S67), the femto base station 1 determines that the actual behavior of the mobile station 2 is an unusual behavior (Scenario 5) (Step S68).
Further, if it is determined that the mobile station 2 is communicating (the YES route in Step S67), the femto base station 1 then determines whether or not the content of that communication matches a record in the service content management table (usual pattern of behavior) (Step S69).

If it is determined that the content of the communication by the mobile station 2 matches a record in the service content management table (usual pattern of behavior) (the YES route in Step S69), the femto base station 1 determines that the actual behavior of the mobile station 2 is an unusual behavior (Scenario 6) (Step S70).
Otherwise, if it is determined that the content of the communication by the mobile station 2 does not match any of records in the service content management table (usual pattern of behavior) (the NO route in Step S69), the femto base station 1 determines that the actual behavior of the mobile station 2 is an unusual behavior (Scenario 7) (Step S71).

It is noted that since the femto base station 1 can determine that the behavior of the mobile station 2 is an unusual behavior in Step S65 as described above, the processing in Steps S66 to S70 may be omitted.
Further, since the behavior management table and the service content management table are not available until a certain time period elapses, the femto base station 1 cannot determine whether or not the behavior of the mobile stations 2 is a usual behavior until the time period elapses.

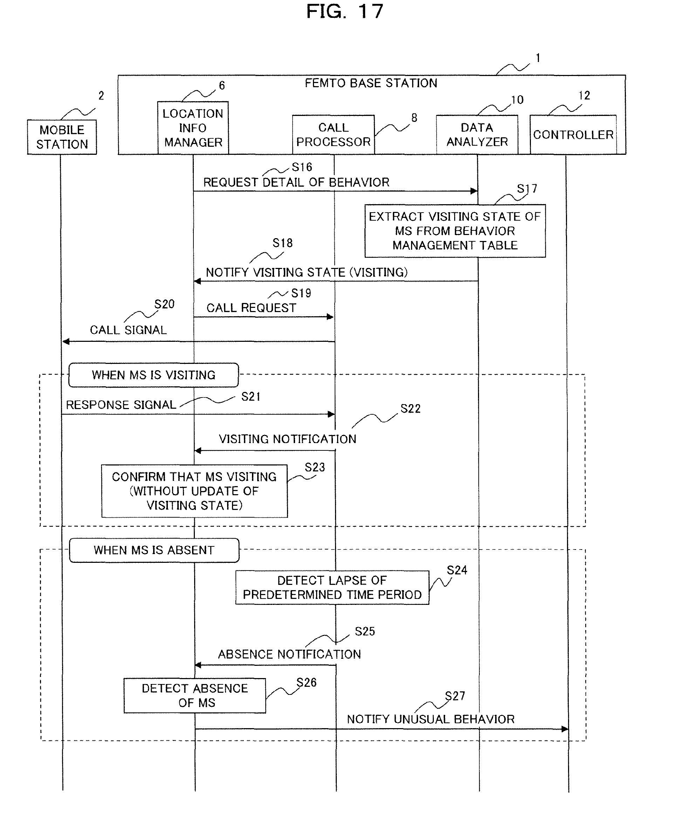

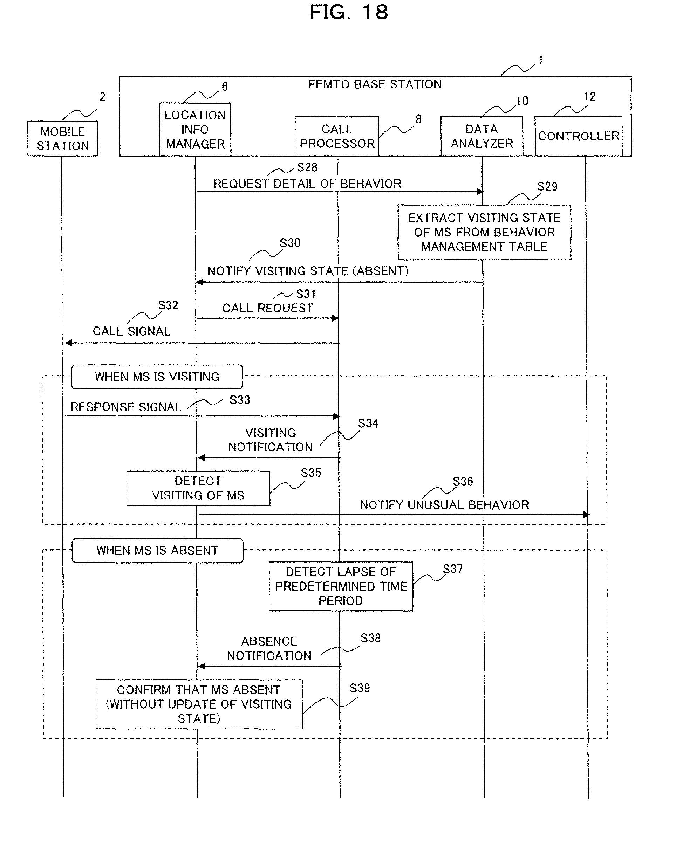

Accordingly, for example, the femto base station 1 may determine all behaviors of the mobile stations 2 as unusual behaviors before the certain time period elapses and request a user authentication.
Further, for example, the femto base station 1 may determine all behaviors of the mobile stations 2 as usual behaviors before the certain time period elapses, and the femto base station 1 may not request a user authentication.
Here, how the visiting state is determined in the above-described determination processing will be described with reference to FIGS. 17 and 18.

The example depicted in FIG. 17 is the case where a record in the behavior management table (usual behavior) is visiting in a certain time period.
Firstly, as depicted in FIG. 17, the location information manager 6 requests the data analyzer 10 for results of the analysis (details of behavior) on the behavior of a mobile station 2 in the present time period (Step S16), for example.

In response to the behavior detail request from the location information manager 6, the data analyzer 10 extracts the visiting state of the mobile station 2 in the time period corresponding to the behavior detail request from the behavior management table (Step S17), and notifies the location information manager 6 of the visiting state (e. g. , visiting) (Step S18).
Next, in response to receiving the visiting state (visiting) from the data analyzer 10, the location information manager 6 sends a call request to the call processor 8 (Step S19) . In response, the call processor 8 sends a call signal to the mobile station 2 (Step S20).

Here, if the mobile station 2 is visiting in the cover area of the femto base station 1 when the call signal is sent, the mobile station 2 sends a response signal to the call processor 8 (Step S21).
Upon receiving the response signal from the mobile station 2, the call processor 8 notifies the location information manager 6 of the visiting state (visiting) (Step S22).

Thereby, the location information manager 6 confirms visiting of the mobile station 2 in that time period, determines that the record in the behavior management table is correct, and does not update the visiting state (Step S23).
Otherwise, if the mobile station 2 is not visiting the cover area of the femto base station 1 when the call signal is sent, the mobile station 2 cannot send a response signal to the call processor 8.

Hence, when the call processor 8 detects that a predetermined time period elapses after the transmission of the call signal (Step S24), the call processor 8 determines that the mobile station 2 did not respond. In other words, the call processor 8 determines that the mobile stations 2 has moved out of the cover area 200 of the femto base station 1
Then upon determining that the mobile station 2 did not respond, the call processor 8 notifies the location information manager 6 of the visiting state (absent) (Step S25). It is noted that the visiting state (absence) may include the time period when it is determined that the mobile station 2 is absent, for example.

Thereby, the location information manager 6 detects the absence of the mobile station 2 in that time period (Step S26). Since the detail of behavior of the mobile station 2 does not match records in the behavior management table, the location information manager 6 determines that the behavior is an unusual behavior and notifies the controller 12 that the behavior of the mobile station 2 is an unusual behavior (Step S27).
The controller 12 determines legitimacy of the unusual behavior, as will be described later.

On the other hand, the example depicted in FIG. 18 is the case where a record in the behavior management table (usual behavior) is absent in a certain time period.
In the example depicted in FIG. 18, the location information manager 6 requests the data analyzer 10 for results of the analysis (details of behavior) of the behavior of a mobile station 2 in the present time period (Step S28), for example.
In response to the behavior detail request from the location information manager 6, the data analyzer 10 extracts the visiting state of the mobile station 2 in the time period corresponding to the behavior detail request from the behavior management table (Step S29), and notifies the location information manager 6 of the visiting state (e.g., absent) (Step S30).

Next, in response to receiving the visiting state (absent) from the data analyzer 10, the location information manager 6 sends a call request to the call processor 8 (Step S31) In response, the call processor 8 sends a call signal to the mobile station 2 (Step S32).
Here, if the mobile station 2 is visiting in the cover area of the femto base station 1 when the call signal is sent, the mobile station 2 sends a response signal to the call processor 8 (Step S33).

Upon receiving the response signal from the mobile station 2, the call processor 8 notifies the location information manager 6 of the visiting state (visiting) (Step S34).
Thereby, the location information manager 6 detects the visiting of the mobile station 2 in that time period (Step S35). Since the detail of behavior of the mobile station 2 does not match records in the behavior management table, the location information manager 6 determines that the behavior is an unusual behavior and notifies the controller 12 that the behavior of the mobile station 2 is an unusual behavior (Step S36).

At this point, the controller 12 determines legitimacy of the unusual behavior, as in the example depicted in FIG. 17, as will be described later.
Otherwise, if the mobile station 2 is not visiting the cover area of the femto base station 1 when the call signal is sent, the mobile station 2 cannot send a response signal to the call processor 8.

Hence, when the call processor 8 detects that a predetermined time period elapses after the transmission of the call signal (Step S37), the call processor 8 determines that the mobile station 2 did not respond. In other words, the call processor 8 determines that the mobile station 2 is outside the cover area 200 of the femto base station 1.
Then upon determining that the mobile station 2 did not respond, the call processor 8 notifies the location information manager 6 of the visiting state (absent) (Step S38). It is noted that the visiting state (absence) may include the time period when it is determined that the mobile station 2 is absent, for example.

Thereby, the location information manager 6 confirms absence of the mobile station 2 in that time period, determines that the record in the behavior management table is correct, and does not update the visiting state (Step S39).
It is noted that the femto base station 1 can identify the communication status of the mobile station 2 (the details of the services/information received by the mobile station 2) by executing processing similar to the processing illustrated in FIGS. 17 and 18.

Here, for the above-described Scenarios 1, 2 and 8 where a femto base station 1 determines that the detail of behavior of a mobile station 2 is a usual behavior, no processing /control is required for improving the security, such as a user authentication request.
Hereinafter, an example of the operation of the communication system 100 in Scenarios 3 to 7 wherein a femto base station 1 determines that the detail of behavior of a mobile station 2 is an unusual behavior.

### (1.5.1) Scenario 3

In Scenario 3, the record in the behavior management table (usual pattern of behavior) is visiting and the actual visiting state of a mobile station 2 is also visiting, but the communication status of the mobile station 2 does not match any of records in the service content management table.
The possible behaviors of the mobile station 2 are: (i) a new behavior different from any of usual patterns of behaviors, or (ii) illegitimate use of the mobile station 2.

Therefore, the femto base station 1 requests a user authentication to the mobile station 2, for example.
If the user authentication indicates that the user is legitimate, the femto base station 1 determines that the unusual behavior of the mobile station 2 is a new usual behavior and updates the usual pattern of behavior to reflect the detail of the new usual behavior, for example.
Otherwise, if the user authentication indicates that the user is illegitimate, the femto base station 1 determines that the mobile station 2 is illegitimately used, limits or prohibits use of the mobile station 2, or notifies the carrier network 400 of the detection of the unusual behavior of the mobile station 2, for example.

Thereby, each femto base station 1 can detect illegitimate use of the mobile station 2 by checking whether a notification has been made from any of the femto base stations 1 to the carrier network 400.

### (1.5.2) Scenario 4

In Scenario 4, the record in the behavior management table (usual pattern of behavior) is visiting and the actual visiting state of the mobile station 2 is absent.

The possible behaviors of the mobile station 2 are: (i) a new behavior different from any of usual patterns of behaviors, or (ii) theft of the mobile station 2.
Therefore, the femto base station 1 requests a user authentication to the mobile station 2, for example.
If the user authentication indicates that the user is legitimate, the femto base station 1 determines that the unusual behavior of the mobile station 2 is a new usual behavior and updates the usual pattern of behavior to reflect the detail of the new usual behavior, for example.

Otherwise, if the user authentication indicates that the user is illegitimate, the femto base station 1 determines that the mobile station 2 has been stolen, limits or prohibits use of the mobile station 2, or notifies the carrier network 400 of the detection of the unusual behavior of the mobile station 2, for example.
Thereby, each femto base station 1 can detect illegitimate use or theft of the mobile station 2 by checking whether a notification has been made from any of the femto base stations 1 to the carrier network 400.

### (1.5.3) Scenario 5

In Scenario 5, the record in the behavior management table (usual pattern of behavior) is absent and the actual visiting state of the mobile station 2 is visiting.
The possible behaviors of the mobile station 2 are: (i) a new behavior different from any of usual patterns of behaviors, or (ii) misplacement of the mobile station 2 by a user.

Therefore, the femto base station 1 sends a response request to the mobile station 2, prompting the user to respond, for example.
If the femto base station 1 receives a response from the mobile station 2, the femto base station 1 can determine that the unusual behavior of the mobile station 2 is a new usual behavior and updates the usual pattern of behavior in each table to reflect that new usual behavior.

On the other hand, if the femto base station 1 cannot receive a response from the mobile station 2, the femto base station 1 determines that the mobile station 2 is possibly misplaced and notifies the carrier network 400 of the detection of the unusual behavior of the mobile station 2, for example.
If another mobile station 2 receives a call from the misplaced mobile station 2, the carrier network 400 can notify that mobile station 2 of the detection of the unusual behavior of the mobile station 2. It is noted that the notification may be made by femto base stations 1.

### (1.5.4) Scenario 4

In Scenario 6, the record in the behavior management table (usual pattern of behavior) is absent and the actual visiting state of the mobile station 2 is visiting, and the communication status of the mobile station 2 matches a record in the service content management table (the behavior is a usual behavior).
The possible behavior of the mobile station 2 in this case is: (i) a new behavior different from any of usual patterns of behaviors.

Therefore, the femto base station 1 requests a user authentication to the mobile station 2, for example.
If the user authentication indicates that the user is legitimate, the femto base station 1 determines that the unusual behavior of the mobile station 2 is a new usual behavior and updates the usual pattern of behavior to reflect the detail of the new usual behavior, for example.
Otherwise, if the user authentication indicates that the user is illegitimate, the femto base station 1 determines that the mobile station 2 is illegitimately used, limits or prohibits use of the mobile station 2, or notifies the carrier network 400 of the detection of the unusual behavior of the mobile station 2, for example.

Thereby, each femto base station 1 can detect illegitimate use of the mobile station 2 by checking whether a notification has been made from any of the femto base stations 1 to the carrier network 400.

### (1.5.5) Scenario 7

In Scenario 7, the record in the behavior management table (usual pattern of behavior) is absent and the actual visiting state of the mobile station 2 is visiting, and the communication status of the mobile station 2 does not match any of records in the service content management table (the behavior is an unusual behavior).

The possible behaviors of the mobile station 2 are: (i) a new behavior different from any of usual patterns of behaviors, or (ii) theft/illegitimate use of the mobile station 2.
Therefore, the femto base station 1 requests a user authentication to the mobile station 2, for example.
If the user authentication indicates that the user is legitimate, the femto base station 1 determines that the unusual behavior of the mobile station 2 is a new usual behavior and updates the usual pattern of behavior to reflect the detail of the new usual behavior, for example.

Otherwise, if the user authentication indicates that the user is illegitimate, the femto base station 1 determines that the mobile station 2 has been stolen or illegitimately used, limits or prohibits use of the mobile station 2, or notifies the carrier network 400 of the detection of the unusual behavior of the mobile station 2, for example.
Thereby, each femto base station 1 can detect theft/illegitimate use of the mobile station 2 by checking whether a notification has been made from any of the femto base stations 1 to the carrier network 400.

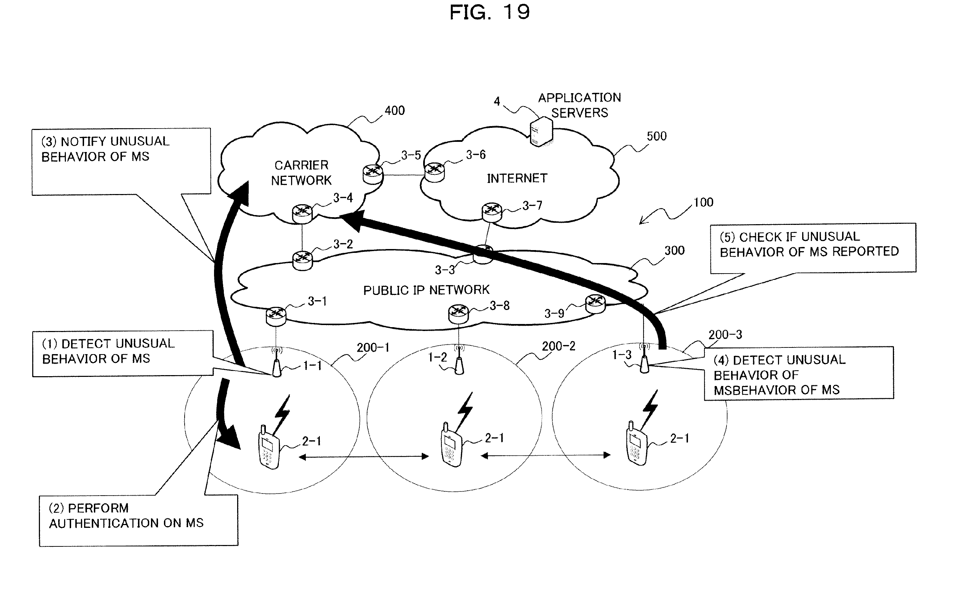

Here, the above-described method of controlling a communication will be described with reference to FIGS. 19 to 21.
As illustrated in FIG. 19, firstly, a femto base station 1 detects an unusual behavior of a mobile station 2, based on contents in each table and the actual behavior of the mobile station 2.
The femto base station 1 then requests a user authentication to the mobile station 2. If it is concluded that the behavior of the mobile stations 2 is an unusual behavior (e.g., illegitimate use) in the user authentication, the femto base station 1 notifies the carrier network 400 of the detection of the unusual behavior.

At this point in time, if another femto base station 1 detects an unusual behavior of the mobile station 2, based on contents in each table and the actual behavior of the mobile station 2, that femto base station 1 checks whether the above-described notification has been made to the carrier network 400 from any of from the femto base stations 1.
Since that femto base station 1 can determine theft /illegitimate use of the mobile station 2 without requiring a user authentication to the mobile stations 2, the efficiency of the processing can be enhanced.

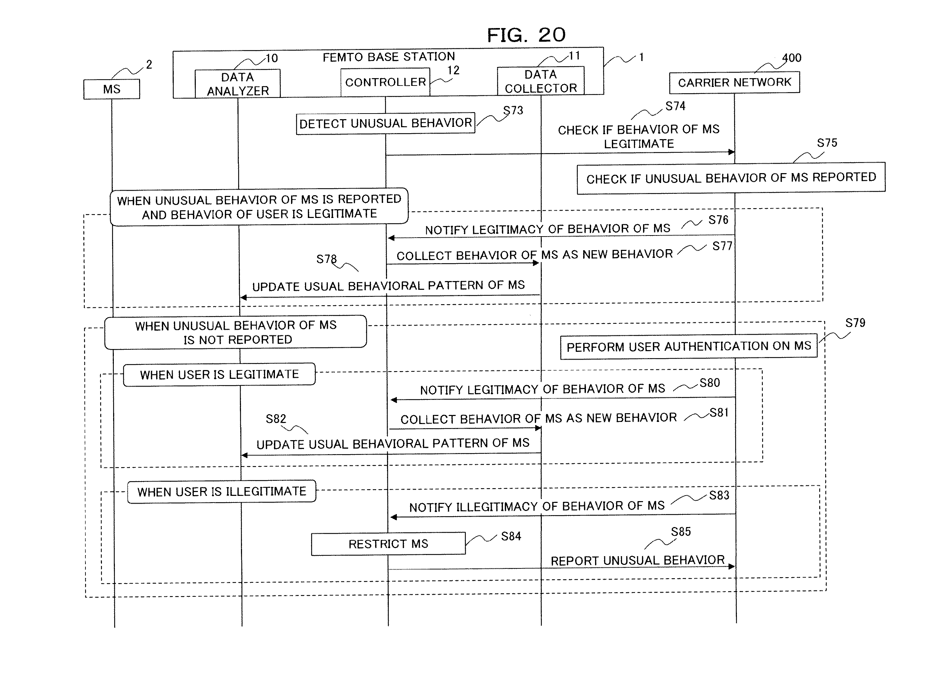

Specifically, as illustrated in FIG. 20, a controller 12 detects an unusual behavior of a mobile station 2 (e.g., a new behavior or illegitimate use) (Step S73).
The controller 12 then inquires the carrier network 400 whether a notification of that unusual behavior of the mobile station 2 has been made from any of the other femto base stations 1 (Step S74).
In response to the inquiry request from the controller 12, the carrier network 400 checks whether a notification (report) has been made from any of the other femto base stations 1 of the unusual behavior of the mobile station 2 (Step S75).

Here, if a notification (report) has been made from any of the other femto base stations 1 of the unusual behavior of the mobile station 2 and the unusual behavior detected by the controller 12 is legitimate, the carrier network 400 notifies the controller 12 (Step S76) of the legitimacy of the behavior.
The controller 12 then determines that the behavior of the mobile station 2 is a new behavior by a legitimate user, and notifies the data collector 11 of the detail of behavior (e.g., visiting state, and details of services/information) (Step S77).

Upon notified the detail of behavior from the controller 12, the data collector 11 notifies the data analyzer 10 of the detail of behavior and updates the usual pattern of behavior of the mobile station 2 (records in each table) (Step S78).
Otherwise, if no notification (report) has been made from any of the other femto base stations 1 of the unusual behavior of the mobile station 2, the carrier network 400 requests a user authentication to the mobile station 2 (Step S79). It is noted that this user authentication request may be made by the femto base station 1 which is notified that no report has been made.

If it is determined that the behavior of the mobile station 2 detected by the controller 12 is legitimate in the user authentication, the carrier network 400 notifies the controller 12 that the behavior of the mobile station 2 detected by the controller 12 is legitimate (Step S80).
The controller 12 then determines that the behavior of the mobile station 2 is a new behavior by a legitimate user, and notifies the data collector 11 of the detail of behavior (e.g., visiting state, and details of services/information) (Step S81).

Upon notified the detail of behavior from the controller 12, the data collector 11 notifies the data analyzer 10 of the detail of behavior and updates usual pattern of behaviors of the mobile station 2 (records in each table) (Step S82).
Otherwise, if it is determined that the behavior of the mobile station 2 detected by the controller 12 is illegitimate in the user authentication, the carrier network 400 notifies the controller 12 that the behavior of the mobile station 2 detected by the controller 12 is not legitimate (Step S83).

The controller 12 then limits use of the mobile station 2 (for example, by blocking any access from the mobile station 2), or prohibits use of the mobile station 2 (Step S84). It is noted that the limitation and prohibition may be done by the carrier network 400. Subsequently, the controller 12 notifies the carrier network 400 that the behavior of the mobile station 2 is an unusual behavior (Step S85). It is noted that this notification may be done by the controller 12 when the controller 12 detects the unusual behavior of the mobile station 2.

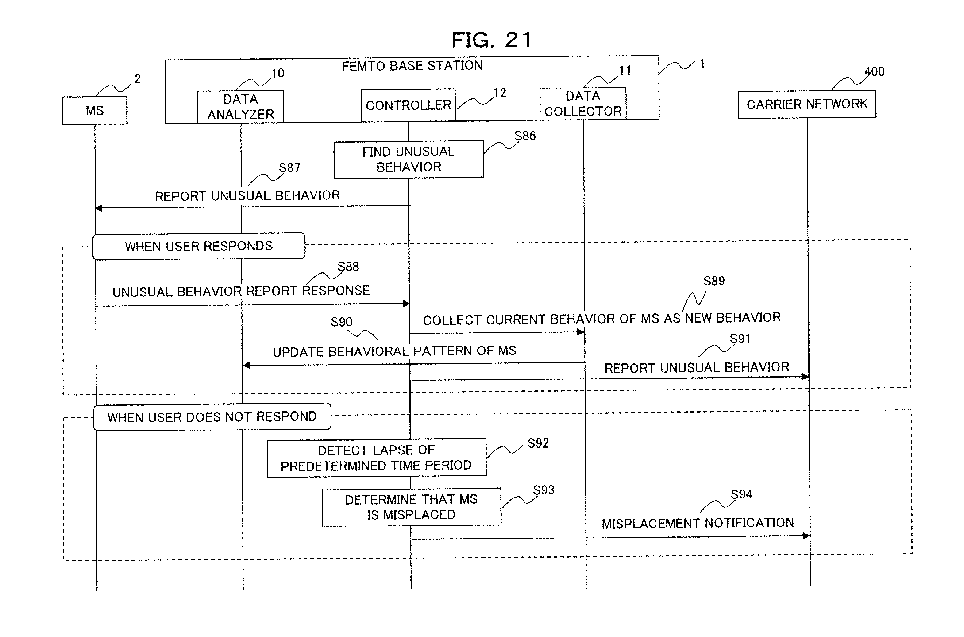

In a case where a mobile station 2 is misplaced, specifically, as illustrated in FIG. 21, when the controller 12 detects an unusual behavior of the mobile station 2 (e.g., misplacement) (Step S86), the mobile station 2 is notified of the detection of the unusual behavior (Step S87) and is requested to respond (Step S87).
In this case, if the mobile station 2 responds during a certain time period (Step S88), the controller 12 determines that the behavior of the mobile station 2 is a new behavior by a legitimate user and notifies the data collector 11 of the detail of behavior (visiting state) (Step S89).

Upon notified the detail of behavior from the controller 12, the data collector 11 notifies the data analyzer 10 of the detail of behavior and updates usual pattern of behaviors of the mobile station 2 (records in the behavior management table) (Step S90).
The controller 12 may further notify the carrier network that the unusual behavior is legitimate (Step S91).

Otherwise, if the mobile station 2 does not respond during the certain time period (Step S92), the controller 12 determines that the mobile station 2 has been misplaced by the user (Step S93) and notifies the carrier network 400 of the possible misplacement of the mobile station 2 (Step S94).
If another mobile station 2 receives a call from the misplaced mobile station 2, the carrier network 400 can notify that mobile station 2 of the possible misplacement of the calling mobile station 2.

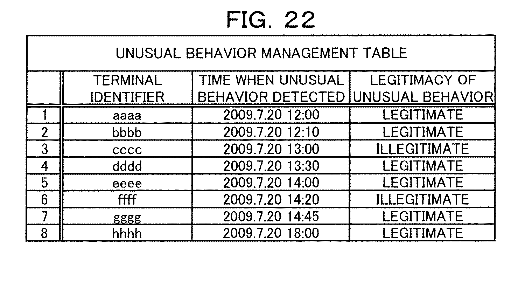

It is noted that the carrier network 400 in this example includes a database (unusual behavior management table) that stores information on unusual behaviors reported from multiple femto base stations 1.
Here, an example of the unusual behavior management table is depicted in FIG. 22.
The unusual behavior management table illustrated in FIG. 22 stores the terminal identifier of a mobile station 2 that makes an unusual behavior, the time when each femto base station 1 detects that unusual behavior, and legitimacy of that unusual behavior which is determined based on a user authentication or the like, each item being related to each other.

Since the carrier network 400 includes the unusual behavior management table as described above, the carrier network 400 can notify the result of the determination as to legitimacy of an unusual behavior of the mobile station 2 reported from another femto base station 1, in response to a request from a femto base station 1.
The femto base station 1 can determine legitimacy of the behavior of the mobile station 2, based on the result of the determination as to legitimacy of the unusual behavior of the mobile station 2 reported from another femto base station 1, without requesting a user authentication to that mobile station 2. This helps to further simplify operations and procedures by the users.

### (2) Others

It is noted that the configurations and operations of the femto base stations 1, mobile stations 2, the carrier network 400, and the like which have been described may be omitted or may be combined as appropriate if necessary.
Although the above-described embodiment has been described using the example where the present invention is applied to femto base stations, the present invention may be applied to other wireless base stations, including macro base stations.

Further, although the above-described embodiment has been described using the example where behaviors of the user are assisted for packet switched (PS) calls, for example, similar behavioral assistances may be provided for circuit switched (CS) calls.
Specifically, a wireless base station can manage called parties routinely called by a mobile station as a usual pattern of behaviors, by collecting and managing the telephone numbers of the called parties of a mobile station.

Further, the above-described embodiment has been described wherein wireless base stations collects information related to visiting states and communication statuses of mobile stations, pattern of statuses of mobile stations may be set in wireless base stations.

### INDUSTRIAL APPLICABILITY

As described above in detail, in accordance with the present invention, wireless base stations maintain details of usual behaviors of mobile stations, and detect services/information delivery and illegitimate use of the mobile stations. Since this technique can help to improve the usability of the mobile stations, the technique is quite useful in the technical field of wireless communication.

### Description of Reference Characters

1, 1-1 to 1-3 FEMTO BASE STATION
2, 2-1 and 2-2 MOBILE STATION
3, 3-1 to 3-9 GATEWAY APPARATUS
4 APPLICATION SERVERS
5 NETWORK INTERFACE
6 LOCATION INFORMATION MANAGER
7 SERVICE PROCESSOR
8 CALL PROCESSOR
9 FEMTO LOCATION INFORMATION TRANSMITTER
10 DATA ANALYZER
11 DATA COLLECTOR
12 CONTROLLER
13 PROTOCOL PROCESSOR
14 PROTOCOL IDENTIFYING UNIT
15, 16 WIRELESS INTERFACE
17 AUTHENTICATION REQUEST PROCESSOR
18 USER AUTHENTICATION UNIT
19 USER INTERFACE
20 APPLICATION PROCESSOR
100 COMMUNICATION SYSTEM
200, 200-1 to 200-3 COVER AREA
300 PUBLIC IP NETWORK
400 CARRIER NETWORK
500 INTERNET

## Claims

1. A wireless base station capable of communicating with a wireless terminal, the wireless base station comprising:
an analyzer that analyzes a pattern of a status of the wireless terminal; and
a controller that provides the wireless terminal with information or a function based on the pattern.

2. The wireless base station according to claim 1, wherein the pattern includes information related to a visiting state of the wireless terminal to the wireless base station.

3. The wireless base station according to claim 1, wherein the analyzer analyzes a past pattern of the status of the wireless terminal, and the controller provides the wireless terminal with the information or the function, based on a comparison of a latest status of the wireless terminal with the past pattern analyzed by the analyzer.

4. The wireless base station according to claim 2, further comprising a collector that collects information related to the visiting state, by sending a call signal to the wireless terminal and receiving a response for the call signal.

5. The wireless base station according to claim 1, wherein the pattern includes information related to a communication status of the wireless terminal.

6. The wireless base station according to claim 5, wherein the information related to the communication status includes at least one of address information of a destination being connected by the wireless terminal and communication time period information of the wireless terminal.

7. The wireless base station according to claim 5 or 6, further comprising a collector that collects information related to the communication status of the wireless terminal, regarding data being communicated by using a certain communication protocol.

8. The wireless base station according to any one of claims 1 and 5 through 7, wherein the controller collects a service or information to which the wireless terminal accesses, based on the pattern analyzed by the analyzer, and delivers the service or the information to the wireless terminal.

9. The wireless base station according to any one of claims 1 through 8, wherein if the latest status of the wireless terminal is not any of the patterns analyzed by the analyzer, the controller requests authentication processing to the wireless terminal.

10. The wireless base station according to claim 9, wherein if the latest status of the wireless terminal is not any of the patterns analyzed by the analyzer, the controller reports that the latest status of the wireless terminal is not any of the patterns analyzed by the analyzer, to a network upstream to the wireless base station.

11. A communication system comprising:
a wireless terminal;
a wireless base station capable of communicating with the wireless terminal;
an analyzer that analyzes a pattern of a status of the wireless terminal;
a controller that collects a service or information accessed by the wireless terminal, based on the pattern, and delivers the service or the information to the wireless terminal; and
a receiver that receives the service or the information from the controller.

12. A communication system comprising:
a wireless terminal;
a wireless base station capable of communicating with the wireless terminal;
an analyzer that analyzes a pattern of a status of the wireless terminal; and
a controller that requests authentication processing to the wireless terminal, based on a comparison of a latest status of the wireless terminal with the pattern analyzed by the analyzer;
an authentication unit that performs the authentication processing in response to the request from the controller; and
a transmitter that sends a result of the authentication processing by the authentication unit to the wireless base station.

13. The communication system according to claim 12, wherein if the latest status of the wireless terminal is not any of the patterns analyzed by the analyzer, the controller reports that the latest status of the wireless terminal is not any of the patterns analyzed by the analyzer, to a network upstream to the wireless base station, and the network comprises a database that stores a content of the report.

14. A method of controlling a communication in a communication system comprising a wireless terminal and a wireless base station capable of communicating with the wireless terminal, the method comprising:
analyzing, by the wireless base station, a pattern of a status of the wireless terminal;
collecting, by the wireless base station, a service or information to which the wireless terminal accesses, based on the analyzed pattern of the status, and delivering the service or the information to the wireless terminal; and
receiving, by the wireless base station, the service or the information from the wireless base station.

15. A method of controlling a communication in a communication system comprising a wireless terminal and a wireless base station capable of communicating with the wireless terminal, the method comprising:
analyzing, by the wireless base station, a pattern of a status of the wireless terminal;
requesting, by the wireless base station, authentication processing to the wireless terminal, based on a comparison of a latest status of the wireless terminal with the analyzed pattern;
performing, by the wireless terminal, the authentication processing in response to the request; and
sending, by the wireless terminal, a result of the authentication processing to the wireless base station.
